# EUROPEAN PATENT APPLICATION

(11) **EP 3 706 064 A1**
(43) Date of publication of application: **09.09.2020**
(21) Application number: 19208725.2
(22) Date of filing: 26.12.2012
(51) Int. Cl.: G06Q 40/06, G06Q 10/06, G06Q 40/08

(54) **GENERATION OF CORPORATE GREEN SCORE USING SOCIAL MEDIA SOURCED DATA AND SENTIMENT ANALYSIS**

(30) Priority: 27.12.2011 US 201113337703
(62) Divisional of application: 12863033.2
(71) Applicant: Financial & Risk Organisation Limited, London, E14 5AQ (GB)
(72) Inventor: Andrews, Sarah L., NY 10019 (US); Dam, Peenaki, London, E14 5AQ (GB); Frennet, Damien, London, E14 5AQ (GB); Chaudhuri, Summit, London, E14 5AQ (GB); Rodriguez, Ricardo, NY 10128 (US); Ganapam, Ashok, NY 10021 (US); Schilder, Frank, Saint Paul, MN 55104 (US); Leidner, Jochen Lothar, London, E14 5AQ (GB)
(74) Representative: IPrime Rentsch Kaelin AG

(57) **Abstract**

The present invention provides a News/Media Analytics System (NMAS) adapted to automatically process and "read" news stories and content from blogs, twitter, and other social media sources, represented by news/media corpus, in as close to real-time as possible. Quantitative analysis, techniques or mathematics, such as green scoring/composite module and sentiment processing module are processed to arrive at green scores, green certification, and/or model the value of financial securities, including generating a green score, green compliance certification, and a composite environmental or green index. The NMAS automatically processes news stories, filings, new/social media and other content and applies one or more models against the content to determine green scoring and/or anticipate behavior of stock price and other investment vehicles. The NMAS leverages traditional and, especially, social media resources to provide a sentiment-based solution for scoring the "greenness" of companies.

## Description

### FIELD OF THE INVENTION

The present invention relates generally to financial services and to the mining of information from conventional news sources and new/social media sources and other sources of content to discern sentiment and to predict behavior for pricing and recommendation. More particularly, the present invention provides intelligent analytics that enable measuring and/or scoring the "Greenness" of companies and associated areas of risk and predictive firm valuation behavior as perceived by conventional and new media and/or for generating a composite "environmental" index. The present invention provides a dynamic tool that leverages machine learning capabilities, news sentiment expertise, and intelligent analytics to provide a service for benchmarking the environmental and sustainability sentiment of private and publicly traded companies.

### BACKGROUND OF THE INVENTION

With the advents of the printing press, typeset, typewriting machines, computer-implemented word processing and mass data storage, the amount of information generated by mankind has risen dramatically and with an ever quickening pace. More recently, less formal sources of content have become increasingly prevalent, including "social media." As opposed to traditional media, which is passive in nature in that the content is read, social media is more interactive, instantaneous, and often leads to quicker response or reaction times. As a result or the growing and divergent sources of information, there is a continuing and growing need to collect and store, identify, track, classify and catalogue, and process this growing sea of information/content and to deliver value added service to facilitate informed use of the data and predictive patterns derived from such information. The development and widespread deployment of and accessibility to high speed networks, e.g., Internet, there exists a growing need to adequately and efficiently process the growing volume of content available on such networks to assist in decision making. In particular the need exists to quickly process information pertaining to current events to enable informed decision making in light of the effect of current events or related sentiment and in consideration of the effect such events and sentiment may have on the price of traded securities or other offerings. Widespread availability and access to blogs, wikis, fora, chats and social media enables an ever-expanding audience to express opinions about people, companies, governments, and commercial products. Virtually instantaneous and simultaneous access to information can increase correlation between event and stock price.

In many areas and industries, including financial services sector, for example, there are content and enhanced experience providers, such as The Thomson Reuters Corporation, Wall Street Journal, Dow Jones News Service, Bloomberg, Financial News, Financial Times, News Corporation, Zawya, New York Times. Such providers identify, collect, analyze and process key data for use in generating content, such as reports and articles, for consumption by professionals and others involved in the respective industries, e.g., financial consultants and investors. In one manner of content delivery, these financial news services provide financial news feeds, both in real-time and in archive, that include articles and other reports that address the occurrence of recent events that are of interest to investors. Many of these articles and reports, and of course the underlying events, may have a measureable impact on the trading stock price associated with publicly traded companies. Although often discussed herein in terms of publicly traded stocks (e.g., traded on markets such as the NMASDAQ and New York Stock Exchange), the invention is not limited to stocks and includes application to other forms of investment and instruments for investment. Professionals and providers in the various sectors and industries continue to look for ways to enhance content, data and services provided to subscribers, clients and other customers and for ways to distinguish over the competition. Such providers strive to create and provide enhance tools, including search and ranking tools, to enable clients to more efficiently and effectively process information and make informed decisions.

Advancements in technology, including database mining and management, search engines, linguistic recognition and modeling, provide increasingly sophisticated approaches to searching and processing vast amounts of data and documents, e.g., database of news articles, financial reports, blogs, SEC and other required corporate disclosures, legal decisions, statutes, laws, and regulations, that may affect business performance and, therefore, prices related to the stock, security or fund comprised of such equities. Investment and other financial professionals and other users increasingly rely on mathematical models and algorithms in making professional and business determinations. Especially in the area of investing, systems that provide faster access to and processing of (accurate) news and other - information related to corporate performance will be a highly valued tool of the professional and will lead to more informed, and more successful, decision making.

Many financial services providers use "news analysis" or "news analytics," which refer to a broad field encompassing and related to information retrieval, machine learning, statistical learning theory, network theory, and collaborative filtering, to provide enhanced services to subscribers and customers. News analytics includes the set of techniques, formulas, and statistics and related tools and metrics used to digest, summarize, classify and otherwise analyze sources of information, often public "news" information. An exemplary use of news analytics is a system that digests, i.e., reads and classifies, financial information to determine market impact related to such information while normalizing the data for other effects. News analysis refers to measuring and analyzing various qualitative and quantitative attributes of textual news stories, such as that appear in formal text-based articles and in less formal delivery such as blogs and other online vehicles. More particularly, the present invention concerns analysis in the context of electronic content. Attributes include: sentiment, relevance, and novelty. Expressing, or representing, news stories as "numbers" or other data points enables systems to transform traditional information expressions into more readily analyzable mathematical and statistical expressions. News analysis techniques and metrics may be used in the context of finance and more particularly in the context of investment performance - past and predictive.

News analytics systems may be used to measure and predict: volatility of earnings, stock valuation, markets; reversals of news impact; the relation of news and message-board information; the relevance of risk-related words in annual reports for predicting negative returns; sentiment; the impact of news stories on stock returns; and determining the impact of optimism and pessimism in news on earnings. News analytics may be viewed at three levels or layers: text, content, and context. Many efforts focus on the first layer - text, i.e., text-based engines/applications process the raw text components of news, i.e., words, phrases, document titles, etc. Text may be converted or leveraged into additional information and irrelevant text may be discarded, thereby condensing it into information with higher relevance/usefulness. The second layer, content, represents the enrichment of text with higher meaning and significance embossed with, e.g., quality and veracity characteristics capable of being further exploited by analytics. Text may be divided into "fact" or "opinion" expressions. The third layer of news analytics - context, refers to connectedness or relatedness between information items. Context may also refer to the network relationships of news. For example, the Das and Sisk (2005) paper examined the social networks of message-board postings to determine if portfolio rules might be formed based on the network connections between stocks.

After processing news stories based on text, content and context, investors and those involved in financial services desire an understanding of how such vast amounts of information, even processed information, relates to the likely movement of a company's stock price. A commonly used term and form of measurement related to risk of a company is "Alpha." As used in the present application, "Alpha" represents a measure of performance on a risk-adjusted basis. For instance, Alpha considers the volatility (i.e., price risk) of an instrument, stock, bond, mutual fund, etc. and compares risk-adjusted performance to another performance measurement, e.g., a benchmark or other index. The return of the investment vehicle, e.g., mutual fund, as compared to the return of the benchmark, e.g., index, is the investment vehicle's Alpha. In addition, Alpha may refer to the abnormal rate of return on a security or portfolio in excess of what would be predicted by an equilibrium model like the capital asset pricing model. Alpha is one of five widely considered technical risk ratios. In addition to Alpha, other technical risk factor statistical measurements used in modern portfolio theory include: beta, standard deviation, R-squared, and the Sharpe ratio. These statistical risk indicators are used by investment firms to determine a risk-reward profile of a stock, bond or other instrument-based investment vehicle such as a mutual fund. In the case of a mutual fund, for example, a positive or negative Alpha of 1.0 means that the mutual fund has outperformed its benchmark index, respectively, by positive or negative 1%. Accordingly, if a capital asset pricing model analysis estimates that a portfolio should earn 10% based on the risk of the portfolio and the portfolio actually earns 15%, then the portfolio's alpha would be positive 5% and represents the excess return over what was predicted in the model analysis.

In particular as it relates to the present invention, evolving pressure from governmental regulators and an increasingly "green" conscious public, have resulted in increasing demand from interested parties, e.g., investment community and others in the financial services industry, for new tools to evaluate degree of "greenness" (or green score or factor) and/or environmental compliance of companies/investments and to manage key areas of risk exposure. Investment firms and managers concerned with green/environmental investing need a solution that provides information concerning and tools for evaluating greenness and/or environmental compliance of companies. As used herein, "greenness" refers to products, manufacturing, distribution, packaging, or other corporate practices of a company as it relates to environmental impact of the company and its products. For example, a product's green score may consider: the use of recycled materials included in a product, the amount of energy required to operate the product, the electromagnetic effects of the product, and the amount of harmful discharge or pollution given off by the product. Countries and regions have enacted legislation, regulations, certifications and standards and other requirements (e.g., RoHS (EU)) that concern the operation of products as well as the disposal, reclaiming and handling of such products. Certain manufacturing processes and materials have been found to have adverse environmental impact and are restricted or regulated. Certain practices have been found to promote or satisfy environmental sustainability. In operation, companies may be "paper-free" and may include environmental-friendly materials and systems in its facilities. Allowing employees to work from home may promote a reduced burden on commuting, reduced consumption of natural resources and reduced harmful emissions.

In addition to investment concerns, corporations are increasingly aware and focused on making green investments in connection with Governance, Risk, and Compliance (GRC), Corporate Social Responsibility (CSR) initiatives and Environmental Social Governance (ESG) initiatives. What is needed is a solution that helps such companies evaluate and track effectiveness and performance of its green investments and efforts. What is needed is a tool that helps manage market and reputational risks that result from negative trends and prove a certain level of conformity with some green/social standards. Also, regulators and others need a solution that helps them identify and manage potential hotspots, such as topics or geographic areas of environmental concern, as they debate, propose and enact impactful green legislation.

Green-related behavior can have a serious impact on a variety of issues directly and indirectly affecting corporations, market indexes, and investors of equities, bonds, etc. A recent example of a green-related event affecting valuation and behavior is the explosion, and resulting oil spill disaster, of an offshore drilling platform in the Gulf of Mexico off the Louisiana coast. This event greatly affected the financial performance of several entities, including publicly traded British Petroleum ("BP"). The news of the disaster had the immediate effect of causing BP common stock to decline sharply on the day of the disaster and days following. In addition to quantifiable financial losses associated with asset damage, oil clean-up costs, claims filed by those adversely affected by the spill, BP suffered from the resulting political and social fallout. The Exxon Valdez oil tanker grounding and resulting spill is another such example. While there are some organizations that keep track of such events and may keep company scorecards that represent relative performance, there is no system that effectively monitors events and provides contemporaneous information to investors concerning how such events may affect corporate performance, e.g., stock price.

The "green analytics" space is substantial and rapidly growing with investment firms and managers driving much of the growth and having the highest projected demand for green analytics. Existing products within the green analytics space generally fall under three categories: ESG Risk Solutions, Thematic Indices and Benchmarks, and Reputation Monitoring. One provider in the space is RiskMetrics/KLD, which specializes in web-based research services and thematic indices and carbon analytics. Financial services companies offer ESG products through indices and web-based research platforms. Societe Generale, for example, offers thematic indices covering a variety of issues from human rights to CSR. Other participants, such as FTSE, Dow Jones, and Calvert Investments, provide an environmental index that investors can use for benchmarking and portfolio construction. In the reputation monitoring space, companies such as RepRisk and Factiva Insight offer tools deployed through the web, which may be broad-based intelligence or focused, e.g., brand risk as it relates to environmental issues. Third party sources may be used such that analyst sentiment is processed visually and deployed through the web, allowing customers to monitor negative green news by company and industry.

All of these efforts suffer shortcomings, including an inherent redundancy that shadows green-oriented products. These efforts to measure greenness of a company are compromised in that they use the same sources from which they derive metrics (i.e., third-party research, corporate filings, regulations). Moreover, assessments are done by analysts and are highly dependent on the timeliness of public filings and secondary research, analogous to the dilemma facing credit rating agencies that compete with a real-time credit default swap curve.

Presently, customers face a market of products that offer essentially the same human-driven research tool, albeit through different deployment methods and visualizations. Asset managers who serve green conscious retail and institutional investors may find it difficult to leverage these tools to fulfill their mandate of investing in green companies and perhaps more importantly, conveying the value of these investments to their customers. A recent study by the University of Zurich highlights this dilemma. Using ESG data from RepRisk, the study compared the sustainability of green funds with that of conventional equity funds.

The fact that these tools are driven primarily by the same sources and fundamental analysis means they can yield similar results that do not fully capture the perceptions associated with being green. Arguably, these tools ignore latent trends from non-traditional sources that add tremendous value to decision-making.

The same notion is readily applicable to Corporations and Regulators. Facing the need to monitor their brand and manage the reputational risks that arise from poor CSR performance and bad publicity, Corporations need a tool that updates regularly and leverages volumes of new media in a systematic way. More importantly, they need a tool that captures the perception element that other products are missing. Meanwhile, Regulators are now tasked with not only managing environmental hotspots at the industry level, but also at the company level, especially if the companies in question receive public funds for investment.

What is needed is a system capable of automatically processing or "reading" news stories, filings, new/social media and other content available to it and quickly interpreting the content to arrive at a higher understanding of assessing the environmental impact of an entity (private or public). It is further needed to create and apply predictive models to anticipate behavior of stock price and other investment vehicles prior to the actual movement of such stocks and other investments based on an entity's environmental impact. Presently, there exists a need to utilize and leverage traditional and, especially, new media resources and trends and satisfy customer's need for advanced analytics relevant to corporate performance, price behavior, investing, and reputational awareness to provide a sentiment-based solution that expands the scope of conventional tools to include social media and online news.

### SUMMARY OF THE INVENTION

The present invention utilizes and leverages new media resources and trends to satisfy customer's needs for advanced analytics relevant to ESG mandates, green investing, and reputational awareness. For environmental issues, the effects of social media are increasingly profound. With the promulgation of carbon legislation and commercialization of a global culture geared towards 'greenness', the effects of new media on environmental and social governance will increase over time. The present invention, in its various embodiments, provides a green sentiment solution that expands the scope of conventional tools to include social media and online news to generate and present enhanced tools, content and solutions. The invention provides indication of the environmental behavior of an entity by a simple score that could be negative or positive and evolving over time. Intelligent analytics allow customers to measure the "greenness" of companies as perceived by conventional and new media. The solution aggregates content from multiple sources, private and public including social media content. A taxonomy is tuned to understand the subject, text, phrases, sentences, comments and other content as having, or not, a green or environmental connotation. The result may be in the form of one or more of a green score, a composite environment or green index and green company certification or classification.

In one implementation, the present invention provides a News/Media Analytics System (NMAS), and related methods, adapted to automatically process and "read" news stories and content from blogs, twitter, and other social media sources in as close to real-time as possible. The invention employs quantitative analysis, techniques or mathematics in conjunction with computer science to arrive at green scores, green certification, and/or model the value of financial securities, including generating a composite environmental index. The present invention provides a system for automatically processing or "reading" news stories, filings, new/social media and other content and for applying predictive models against the content to anticipate behavior of stock price and other investment vehicles. The NMAS leverages traditional and, especially, new media resources to provide a sentiment-based solution that expands the scope of conventional tools to include social media and online news.

In addition to, and in some respects supplanting, traditional media sources and delivery means, "social media" has added a new layer of information sharing and gathering that far exceeds conventional forms of media. Not bound by traditional models and workflow, blogs and other forms of social media have become a tremendously accessible and far reaching source of real-time news and situational updates. On the investment front, start-ups like Seeking Alpha and the traditional financial news providers are heading into the blogosphere and social media at an exponential rate. Blogs and other new media have become a top source of investment advice and for some surpass traditional sources. "Social media" or social network sources refer to non-traditional, often less formal forms of content delivery and includes interactive user or crowd-sourced data and content. Examples of social media include: news websites (reuters.com, bloomberg.com etc); online forums (livegreenforum.com); website of governmental agencies (epa.gov); websites of academic institutes, political parties (mcgill.ca/mse, www.democrats.org etc); online magazine websites (emagazine.com/); blogging websites (Blogger, ExpressionEngine, LiveJournal, Open Diary, TypePad, Vox, WordPress, Xanga etc); microblogging websites (Twitter, FMyLife, Foursquare, Jaiku, Plurk, Posterous, Tumblr, Qaiku, Google Buzz, Identi.ca Nasza-Klasa.pl etc); social and professional networking sites (facebook, myspace, ASmallWorld, Bebo, Cyworld, Diaspora, Hi5, Hyves, Linkedln, MySpace, Ning, Orkut, Plaxo, Tagged, XING , IRC, Yammer etc); online advocacy and fundraising websites (Greenpeace, Causes, Kickstarter); information aggregators (Netvibes, Twine etc); and Twitter.

In one manner, private investors who are sensitive to the environmental behavior of an entity may use the present invention to monitor and collect information from social media that would otherwise not be available from or at least lag when monitoring traditional "mainstream" or regular media. With increasingly widespread adoption of new social media, such sources are increasingly becoming "mainstream." In addition, the present invention may be used to aggregate content from several social media content producers to confirm, verify or otherwise strengthen information collected.

The NMAS may include sentiment processing to process news/media information and to assign a "sentiment score" to news/media items related to one or more companies. The score may be derived from text and metadata from news/media and may apply a predefined or learned lexicon-based and/or sentiment pattern to the processed text/metadata. The NMAS may include a training or learning module that analyzes past news/media and the resulting responses of related stock prices in light of certain events to build a model to predict stock behavior given certain types of news or events, including those related to green or environmental events, credentials, legislation, etc.

In one manner, the invention may be used to process traditional and new media sources of content as sources of "Alpha" in the context of determining or representing "greenness" or a composite environmental index. In exemplary implementation, a NMAS operated by a traditional financial services company may apply internal textual sources and external sources against predictive models to arrive at anticipated market-related behavior. Hard facts and sentiment are considered as factors that drive green scoring and/or composite environmental index. The NMAS news/media sentiment analysis and green scoring enhances investment and trading strategies and lead to informed trading and investment decisions.

In addition, the present invention may be used to generate a classification system of environmentally conscious or friendly companies that serves as a classification system for green investing. The present invention may be used to classify or certify a company as "green compliant" and to create a "Green Sentiment Index" comprised of companies that have attained a green certification. A green index is likely to attract investors interested in promoting environmentally responsible businesses.

Unlike other approaches that rely on periodic research processed by analysts, the present invention continuously processes media feeds and produces a stream of information and data that captures daily trends along with the added value of intelligent alerts and a portal allowing users, e.g., customers, to access a chain of content. As green or environment related news and social media content increases, media services companies will leverage products and services across a broad platform of offerings, e.g., Thomson Reuters Markets. The present invention enables companies to connect offerings across divisions and accelerate market share penetration of the green analytics space.

The present invention may be used to track "green" sentiment over time to provide an analysis of company-related news/media commentary and tools and analytics to guide trading and investment decisions based on green or environmental issues. The invention may be powered by natural language processing with linguistics technology. The invention provides quantitative "green" strategies that support human decision making, risk management and asset allocation. The invention may be used in market making, in portfolio management to improve asset allocation decisions by benchmarking portfolio sentiment and calculating sector weightings, in fundamental analysis to forecast stock, sector, and market outlooks, in risk management to better understand abnormal risks to portfolios and to develop potential sentiment hedges, and to track and benchmark public perception and media coverage as well as that of competitors.

In a first embodiment, the invention provides a. A computer implemented method comprising: identifying an entity to which a green score will be assigned; calculating the green score based upon a set of social media information; and transmitting the green score. The set of social media information may be associated with the identified entity, the entity being associated with a traded security, the set of social media information representing green information concerning the entity, and the green score represents a greenness attribute of the entity. The method may further comprise modifying the green score over time based on an additional set of social media information and transmitting a modified green score. Calculating the green score may include determining a sentiment score based at least in part on the set of social media information and wherein the green score represents a green sentiment score. The method may further comprise certifying the entity as green compliant based at least in part on the green score; performing steps (a)-(c) for a second identified entity resulting in a second green score, and wherein transmitting the green score comprises transmitting a data feed including data reflecting the green score and the second green score; generating an alert signal concerning the entity based at least in part on the value of the calculated green score; and/or identifying text in a set of content received from a set of social media, the text identified as representing the entity, and further comprising extracting further text from the set of content identified as representing a sentiment related to greenness of the entity. The identified text in a set of content may include one or more of: identifying embedded metadata or other descriptors; processing text, words, phrases; applying natural language linguistics analysis; applying Bayesian techniques. The method may further comprise aggregating a set of content from a plurality of sources including at least one social media source and at least one additional source from the group consisting of: news websites (reuters.com, bloomberg.com etc); online forums (livegreenforum.com); website of governmental agencies (epa.gov); websites of academic institutes, political parties (mcgill.ca/mse, www.democrats.org); online magazine websites (emagazine.com); blogging websites (Blogger, ExpressionEngine, LiveJournal, Open Diary, TypePad, Vox, WordPress, Xanga); microblogging websites (Twitter, FMyLife, Foursquare, Jaiku, Plurk, Posterous, Tumblr, Qaiku, Google Buzz, Identi.ca, Nasza-Klasa.pl); social and professional networking sites (facebook, myspace, ASmallWorld, Bebo, Cyworld, Diaspora, Hi5,Hyves, LinkedIn, MySpace, Ning, Orkut, Plaxo, Tagged, XING , IRC, Yammer); online advocacy and fundraising websites (Greenpeace, Causes, Kickstarter); information aggregators (Netvibes, Twine etc); Facebook; and Twitter, the set of content including the set of social media information. The method may further comprise identifying a set of companies to be associated with a composite index, the set of companies including the entity and being associated with a set of securities; based at least in part upon the set of social media information, generating a composite environmental index for the set of securities; and transmitting a signal associated with the composite environmental index. The composite environmental index is determined based at least in part on a set of green scores associated with the set of companies and the green score may be generated in real time and/or be arrived at based on one or more of the following positive criteria: product or manufacturing environmental related compliance or certification; energy efficiency; corporate practices that promote environmental stewardship, consumer protection, human rights, and diversity, business/products involved in green technology, energy efficient technologies, alternative fuel technologies, renewable resource technology and/or the following negative criteria: businesses involved in alcohol, tobacco, gambling, weapons, and/or the military, and businesses not environmental standard compliant. The entity is associated with a security traded on a market and further comprising applying a predictive model to arrive at a predicted behavior associated with the security. The method may further comprise generating an expression of the predicted behavior and/or a suggested action to take in light of the predicted behavior. The suggested action relates to a trade decision concerning the security and is one of a group consisting of buy, sell or hold. The set of social media information is identified based on a temporal value. The method may further comprise generating a risk signal representative of a potential risk; providing a set of risk-indicating patterns on a computing device; and identifying within the set of social media information a set of potential risks associated with the entity by using a risk-identification-algorithm based, at least in part, on the set of risk-indicating patterns; comparing the set of potential risks with the risk-indicating patterns to obtain a set of prerequisite risks; generating a signal representative of the set of prerequisite risks; and storing the signal representative of the set of prerequisite risks in an electronic memory. The method may further comprise repeating steps (a)-(c) for a set of entities resulting in a green score calculated for each entity in the set of entities; identifying a green classification; and selecting for inclusion in the classification entities from the set of entities based at least in part on respective entity green scores. The classification may involve certifying companies as green compliant, and wherein each of the selected entities is certified green compliant.

In a second embodiment, the present invention provides a computer-based system comprising: a processor adapted to execute code; a memory for storing executable code; an input adapted to receive a set of social media information associated with an entity to which a green score will be assigned; a green score module adapted to be executed by the processor and including code executable by the processor to calculate the green score based upon a set of social media information; and an output adapted to transmit a signal associated with the green score.

### BRIEF DESCRIPTION OF THE DRAWINGS

In order to facilitate a full understanding of the present invention, reference is now made to the accompanying drawings, in which like elements are referenced with like numerals. These drawings should not be construed as limiting the present invention, but are intended to be exemplary and for reference.
Figure 1 is a first schematic diagram illustrating an exemplary computer-based system for implementing the present invention;
Figure 2 is a second schematic diagram illustrating an exemplary computer-based system for implementing the present invention;
Figure 3 is a search flow diagram illustrating an exemplary method of implementing the present invention;
Figure 4 is a flow diagram illustrating database and document processing, sentiment and green scoring using predictive modeling as input and output of a system employing the present invention;
Figure 5 is a flow chart that represents an exemplary method for producing a sentiment for use in green scoring in connection with the present invention;
Figure 6 is a chart that represents an expression of a green community in the form of a website in connection with the present invention;
Figure 7 represents exemplary forms of output or services in conjunction with the present invention; and
Figures 8-16 are examples of risk mining techniques for use in implementing the present invention.

### DETAILED DESCRIPTION OF THE INVENTION

The present invention will now be described in more detail with reference to exemplary embodiments as shown in the accompanying drawings. While the present invention is described herein with reference to the exemplary embodiments, it should be understood that the present invention is not limited to such exemplary embodiments. Those possessing ordinary skill in the art and having access to the teachings herein will recognize additional implementations, modifications, and embodiments, as well as other applications for use of the invention, which are fully contemplated herein as within the scope of the present invention as disclosed and claimed herein, and with respect to which the present invention could be of significant utility.

The present invention utilizes and leverages new media resources and trends to satisfy customer's needs for advanced analytics relevant to CSR, ESG mandates, green investing, and reputational awareness. The present invention, in its various embodiments, provides a green sentiment solution that expands the scope of conventional tools to include social media and online news to generate and present enhanced tools, content and solutions. The invention includes intelligent analytics that analyze conventional and new media to measure the "greenness" of companies and a resulting score representing the environmental behavior of an entity. The greenness score may be a simple score that could be negative or positive and may evolve over time. The invention aggregates content from multiple sources, private and public including social media or network content, news, websites, and agency news wires (e.g., Twitter, Facebook, websites, RSS). A taxonomy is tuned to understand the subject, text, phrases, sentences, comments and other content as having, or not, a green or environmental connotation.

The invention may include sentiment, sentic and affective computing techniques to analyze text to discern a human sentiment concerning green issues that affect corporate performance and to anticipate a further human response, e.g., selling or buying instruments related to companies. Human emotion may be considered as a time-derived function with a chain of related cause and effect or "affect and effect." For example, in a given situation, e.g., a person faced with a potentially deadly confrontation, the human emotion of fear can be anticipated to be followed with one or more alternative human responses, e.g., to flee or defend. A probabilistic value or relationship may be used to represent one or more anticipated future reactions to the situation. Bayesian networks are often used to represent causal relationships. Additional data may be used to further refine or define the one or more probabilistic relationships. For example, if the person threatened possesses a weapon then the probability of self-defense may be adjusted upward and that to flee downward. Likewise, if the person is backed into a corner or otherwise has limited means of escape then the probabilities may be adjusted. The present invention uses detected human emotions to anticipate further human reactions and does so on a collective basis. The system may then predict or anticipate the human response to that anticipated emotion, e.g., selling of stocks generally or of a particular stock that is the subject of a negative release. The present invention collects or accesses or observes human emotions concerning subjects as expressed at blogs, wikis, online fora, chat rooms, message boards, and social media networks to detect "sentiment" concerning green issues, e.g., an announcement of a company to use "green" or environment-friendly ingredients or materials or practices. The invention processes the information collected using techniques discussed herein to derive a green score or rating based on the determined sentiment. The score may then be further used to recommend a company or to alert or otherwise identify a company for investment consideration. The invention may also be used to generate a composite index of companies that fit selection criteria, such criteria related to environmentally-conscious or sensitive practices. In this manner, investors, individual, fund, etc., may use such a score, rating or index to base investment decisions.

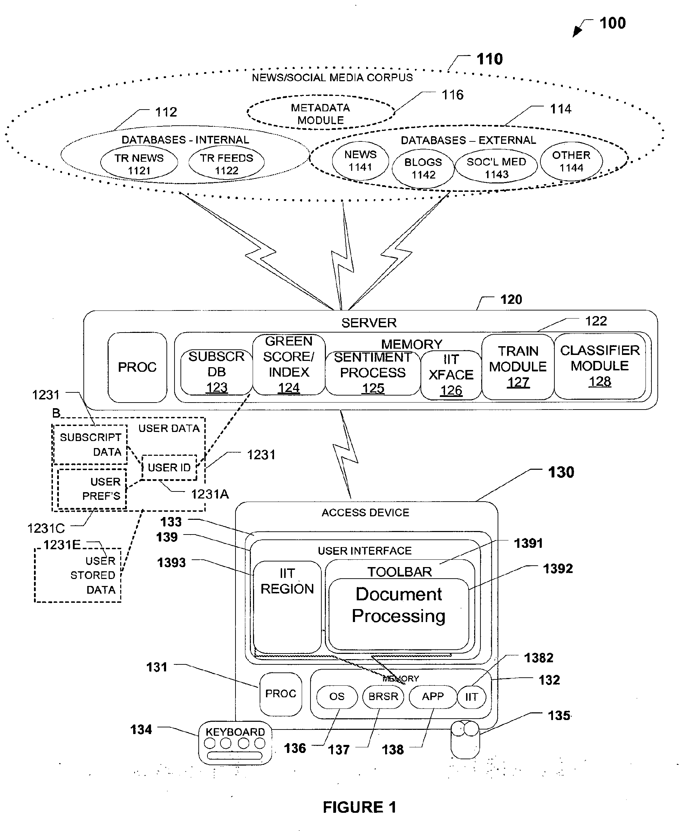

In one implementation, with reference to Figure 1, the present invention provides a News/Media Analytics System (NMAS) 100 adapted to automatically process and "read" news stories and content from blogs, twitter, and other social media sources, represented by news/media corpus 110, in as close to real-time as possible. Quantitative analysis, techniques or mathematics, such as green scoring/composite module 124 and sentiment processing module 125, in conjunction with computer science are processed by processor 121 of server 120 to arrive at green scores, green certification, and/or model the value of financial securities, including generating a composite environmental or green index. The NMAS 100 automatically processes news stories, filings, new/social media and other content and applies one or more models against the content to determine green scoring and/or anticipate behavior of stock price and other investment vehicles. The NMAS 100 leverages traditional and, especially, new media resources to provide a sentiment-based solution that expands the scope of conventional tools to include social media and online news.

The NMAS 100 may receive as input via new media source 1141, blogs 1142, and social media 1143 of news/media corpus 110 content from the following exemplary new and social media sources: news websites (reuters.com, bloomberg.com etc); online forums (livegreenforum.com); website of governmental agencies (epa.gov); websites of academic institutes, political parties (mcgill.ca/mse, www.democrats.org etc); online magazine websites (emagazine.com/); blogging websites (Blogger, ExpressionEngine, LiveJournal, Open Diary, TypePad, Vox, WordPress, Xanga etc); microblogging websites (Twitter, FMyLife, Foursquare, Jaiku, Plurk, Posterous, Tumblr, Qaiku, Google Buzz, Identi.ca Nasza-Klasa.pl etc); social and professional networking sites (facebook, myspace, ASmallWorld, Bebo, Cyworld, Diaspora, Hi5, Hyves, LinkedIn, MySpace, Ning, Orkut, Plaxo, Tagged, XING , IRC, Yammer etc); online advocacy and fundraising websites (Greenpeace, Causes, Kickstarter); information aggregators (Netvibes, Twine etc); Facebook; and Twitter.

The NMAS 100 of Figure 1 includes sentiment processing module 125 adapted to process news/media information received as input via news/media corpus 110 and to assign a "sentiment score" to news/media items related to one or more companies. Sentiment and sentiment score may be derived from computational linguistics and define or represent a tone of an article, blog, social media comment, etc., usually as positive, negative or neutral, with respective scores of +1, -1, and 0, for example. The score may be derived from text and/or metadata (existing or newly assigned by an engine) from news/media and may apply a predefined or learned lexicon-based and/or sentiment pattern to the processed text/metadata. The NMAS 100 may include a training or learning module 127 that analyzes past or archived news/media and the resulting responses of related stock prices in light of certain "facts" or events to build a model to predict stock behavior given certain types of news or events, including those related to green or environmental events, credentials, legislation, etc.

In one manner, the NMAS 100 may be used to process traditional and new media sources of content 110 as sources of "Alpha" in the context of determining or representing "greenness" or a composite environmental index. In exemplary implementation, NMAS 100 is operated by a traditional financial services company, e.g., Thomson Reuters, wherein primary databases - internal 112 is internal textual sources, e.g., TR News and TR Feeds, and applies the data against green scoring module 124 and sentiment processing module 125 and may include predictive models to arrive at anticipated market-related behavior. For example, Thomson Reuters sources as the internal primary database may include legal sources (Westlaw), regulatory (SEC in particular, controversy data, sector specific, Etc.), social media (application of special meta-data to make it useful), and news (Thomson Reuters News) and news-like sources, including financial news and reporting. In addition, internal sources 112 may be supplemented with external sources 114, freely available or subscription-based, as additional data points considered by the predictive model. Hard facts, e.g., explosion on an oil rig results in direct financial losses (loss of revenue, damages liability, etc.) as well as negative environmental impact and resulting negative greenness score, and sentiment, e.g., quantifying the effect of fear, uncertainty, negative reputation, etc., are considered as factors that drive green scoring and/or composite environmental or green index. The results may be used to enhance investment and trading strategies (e.g., stocks and other equities, bonds and commodities) and enable users to track and spot new opportunities and generate Alpha. The news/media sentiment analysis 125 may be used in conjunction with green scoring module 124 to provide green scoring to drive informed trading and investment decisions.

In addition, the NMAS 100 may include a green classification module 128 adapted to generate a classification system of environmentally conscious or friendly companies that serves as a classification system for green investing and that may be used to create a composite environment index. For example, companies presently assigned an RIC (Reuters Instrument Code), a ticker-like code used to identify financial instruments and indices, may be classified as "green compliant" (e.g., achieved/maintained a green score of certain level and/or duration). In this manner the invention may be used to create a class of green-RICs for trading purposes. For example, a "Green Sentiment Index" may be generated and maintained comprised, for instance, of companies that have attained a green certification or green-RIC or the like. A green index is likely to attract investors interested in promoting environmentally responsible businesses.

In one embodiment the NMAS 100 may include a training or machine learning module 127, such as Thomson Reuters' Machine Learning Capabilities and News Analytics, to derive insight from a broad corpus of environmental data, news, and social media, providing a normalized green score at the company (e.g., IBM) and index level (e.g., S&P 500). This historical database or corpus may be separate from or derived from news/media corpus 110.

Preferably, a green score of a company or index is calculated in near real time (e.g., about 150 ms) and is used, for example, to develop alpha strategies for investments, monitor a company's green reputation, and identify changing risk profiles at the company and industry level. Unlike other approaches that rely on periodic research processed by analysts, the present invention receives and continuously processes media feeds, e.g., WWW web and social media feeds, in addition to traditional sources. In one manner, the invention produces a stream of information and data that captures daily trends along with the added value of intelligent alerts and a portal allowing users, e.g., customers, to access a chain of content, e.g., from related and unrelated products, e.g., other Thomson Reuters products. As green or environment related news and social media content increases, media services companies may leverage products and services across a broad platform of offerings, e.g., Thomson Reuters Markets. The present invention enables companies to connect offerings across divisions and accelerate market share penetration of the green analytics space.

For example, green score criteria applied by the green scoring module 124 of the NMAS 100 may include: product or manufacturing environmental related compliance or certification; energy efficiency; corporate practices that promote environmental stewardship, consumer protection, human rights, and diversity. Green score criteria applied by the NMAS 100 may further include: positive attributes or scores for business/products involved in green technology, energy efficient technologies, alternative fuel technologies, renewable resource technology, and negative attributes or scores for businesses involved in alcohol, tobacco, gambling, weapons, and/or the military. The areas of concern recognized by the SRI industry can be summarized as environment, social justice, and corporate governance (ESG). Although described in terms of greenness and environmental compliance, the present invention may be applied in terms of creating a healthful, lifestyle, or other classification for scoring companies based on societal goals and pursuits.

The NMAS 100 may be powered by natural language processing with linguistics technology in processing news/media data and content delivered to it. The NMAS 100 analyzes company-related news/media commentary to track "green" sentiment over time. The quantitative "green" strategies provided by the NMAS 100 may be used in market making, in portfolio management to improve asset allocation decisions by benchmarking portfolio sentiment and calculating sector weightings, in fundamental analysis to forecast stock, sector, and market outlooks, in risk management to better understand abnormal risks to portfolios and to develop potential sentiment hedges, and to track and benchmark public perception and media coverage as well as that of competitors.

The NMAS 100 may automatically analyze news content and generate trade (e.g., buy/hold/sell) signals and/or update green scoring and/or composite environmental index information in close to real-time. As used herein, the term close to real time means within a second. However, the wider the scope of data used in connection with the NMAS, the longer the response time may be. To shorten the response time, a smaller window/volume of data/content may be considered. In addition, the NMAS may be configured to maintain a rolling set of data so that it merely updates the existing scoring and reporting and at any given moment is merely processing ("reading" and scoring and predicting) based on newly discovered, received or released content from whatever source. The NMAS scans and analyzes news and social media content on thousands of companies in close to real-time and feeds the results into quantitative strategies and predictive models. The NMAS outputs can be used to power quantitative strategies across markets, asset classes, and all trading frequencies, support human decision making, and assist with risk management and investment and asset allocation decisions.

Content may be received as an input to the NMAS 100 in any of a variety of ways and forms and the invention is not dependent on the nature of the input. Depending on the source of the information, the NMAS will apply various techniques to collect information relevant to the green scoring. For instance, if the source is an internal source or otherwise in a format recognized by the NMAS, then it may identify content related to a particular company or sector or index based on identifying field or marker in the document or in metadata associated with the document. If the source is external or otherwise not in a format readily understood by the NMAS, the may employ natural language processing and other linguistics technology to identify companies in the text and to which statements relate. Additional such techniques may be used to identify textual terms of potential heightened relevance, for example, score text across the following exemplary, primary dimensions: "Author sentiment" - metrics for how positive, negative or neutral the tone of the item is, specific to each company in the article; "Relevance" - how relevant or substantive the story is for a particular item; "Volume analysis" - how much news is happening on a particular company; "Uniqueness" - how new or repetitive the item is over various time periods; and Headline analysis - denotes special features such as broker actions, pricing commentary, interviews, exclusives, and wrap-ups, among many others. The NMAS uses rich metadata, for example: company identifiers; topic codes - identifying subject matter; stage of the story - alert, article, update, etc.; and business sector and geographic classification codes; index references to similar articles. The metadata across multiple fields provides differentiated content for use by quantitative analysts and sophisticated algorithmic engines.

The NMAS may utilize a variety and variations of text scoring and metadata types. The following are exemplary types for use by the invention: Item Type - Alert, Article, Updates, Corrections; Item Genre - Classification of the story, i.e., interview, exclusive, wrap-up, etc.; Headline - Alert or headline text; Relevance - 0 - 1.0; Prevailing Sentiment - 1, 0, -1; Positive, Neutral, Negative - Provides more detailed sentiment indication; Location of First Mention - Sentence location of the first time the item is mentioned; Total Sentences - Used for article length; Number of Companies - How many companies are tagged to the item; Number of Words/Tokens - How many words/tokens are about the company; Total Words/Tokens - Total words/tokens in the news item; Broker Action - Denotes broker actions: upgrade, downgrade, maintain, undefined or whether it is the broker itself; Price/Market Commentary - Used to flag items describing pricing/market commentary; Item Count - How many items have been published on a company over different time periods; Linked Count - Denotes level of repetition from 12 hours to 7 days; Topic Codes - Describes what the story is about, i.e. RCH=Research; RES=Results; RESF=Results Forecast; MRG=Mergers & Acquisitions, etc.; Other Companies - What are the other companies tagged to the article; and Other Metadata - Index IDs, linked references, story chains, etc.

Figures 1-4 illustrate exemplary structural components and framework for carrying out the present invention and for providing an effective interface for user interaction with such a computer and database-based system. Following that are more detailed descriptions of the implementation of the processes and features of the present invention, including a discussion of low frequency work on news sentiment and a general exploratory data analysis of equities (including volatility and direction) and commodities. In an exemplary scenario, intended not to limit the invention but merely to help illustrate, the following illustrates how news meta-data is related to prices and discusses short-term relationship between news and prices. The exemplary discussion examiners four equity markets (US, UK, Japan and Hong Kong) and four commodities (crude oil, oil products, precious metals and grains). Exemplary forecasting models and frameworks are discussed thereafter, including a description of an exemplary engine for consuming news and making asset price forecasts. Performance is examined with a goal to make short term predictions about returns, trading volume and volatility.

The NMAS may be implemented in a variety of deployments and architectures. NMAS data can be delivered as a deployed solution at a customer or client site, e.g., within the context of an enterprise structure, via a web-based hosting solution(s) or central server, or through a dedicated service, e.g., index feeds. Figure 1 shows an exemplary News/Media Analytics System (NMAS) 100 comprising an online information-retrieval system adapted to integrate with either or both of a central service provider system or a client-operated processing system. In this exemplary embodiment, NMAS System 100 includes at least one web server that can automatically control one or more aspects of an application on a client access device, which may run an application augmented with an add-on framework that integrates into a graphical user interface or browser control to facilitate interfacing with one or more web-based applications. System 100 includes one or more databases 110, one or more servers 120, and one or more access (e.g., client) devices 130.

News/Media Database 110 includes a set of primary databases (Internal) 112, a set of secondary databases (External) 114, and a metadata module 116. Internal databases 112, in the exemplary embodiment, include a News (in this case represented by exemplary Thomson Reuters TR News) services or database 1121 and a Feed (in this case represented by exemplary Thomson Reuters TR News Feed) services or database(s) 1122. The internal component of news/media database 110 may also include internal originating social media content. External databases 114 include News (such as and non-internal) services or database(s) 1141, Blogs database 1142, social media database 1143, and other content database(s) 1144. Metadata module 116 includes is adapted to identify, extract or apply, or otherwise discern metadata associated with news stories and/or social media content. Such metadata may be used by NMAS 100 to pre-process news stories, e.g., sentence splitting, speech tagging, parsing of text, tokenization, etc., to facilitate association of stories with one or more companies and to prepare the content for the application of computational linguistic processes and for sentiment analysis.

Databases 110, which take the exemplary form of one or more electronic, magnetic, or optical data-storage devices, include or are otherwise associated with respective indices (not shown). Each of the indices includes terms and phrases in association with corresponding document addresses, identifiers, and other conventional information. Databases 110 are coupled or couplable via a wireless or wireline communications network, such as a local-, wide-, private-, or virtual-private network, to server 120.

Server 120, which is generally representative of one or more servers for serving data in the form of webpages or other markup language forms with associated applets, ActiveX controls, remote-invocation objects, or other related software and data structures to service clients of various "thicknesses." More particularly, server 120 includes a processor module 121, a memory module 122, which comprises a subscriber database 123, a green scoring/composite index module 124, sentiment processing module 125, and a user-interface module 126, a training/learning module 127 and a classifier module 128. Processor module 121 includes one or more local or distributed processors, controllers, or virtual machines. Memory module 122, which takes the exemplary form of one or more electronic, magnetic, or optical data-storage devices, stores subscriber database 123, green scoring/index composite module 124 (such as for predictive analysis related to a company based on the predictive modeling of the present invention), sentiment processing module 125 (such as other financial services available to the user to further research a company of interest), and user-interface module 126.

Subscriber database 123 includes subscriber-related data for controlling, administering, and managing pay-as-you-go or subscription-based access of databases 110. In the exemplary embodiment, subscriber database 123 includes one or more user preference (or more generally user) data structures 1231, including user identification data 1231A, user subscription data 1231B, and user preferences 1231C and may further include user stored data 1231E. In the exemplary embodiment, one or more aspects of the user data structure relate to user customization of various search and interface options. For example, user ID 1231A may include user login and screen name information associated with a user having a subscription to the green scoring and/or environmental composite index service distributed via NMAS 100. Green scoring/composite index module 124 includes software and functionality for processing functionality described herein above and may be applied, e.g., in conjunction with one or more of sentiment processing module 126, training module 127 and classifier module 128, against one or more of databases 110 to generate or update a green score for a company or generate or update a composite index comprised of a set of stocks based on data received from database or corpus 110. For example, a training set of data, or an initial set of data from databases 110 applied with some form of verification, may be used to train or verify the performance of NMAS 100 for use in an ongoing fashion such as for use in fee-based services offered by an FSP.

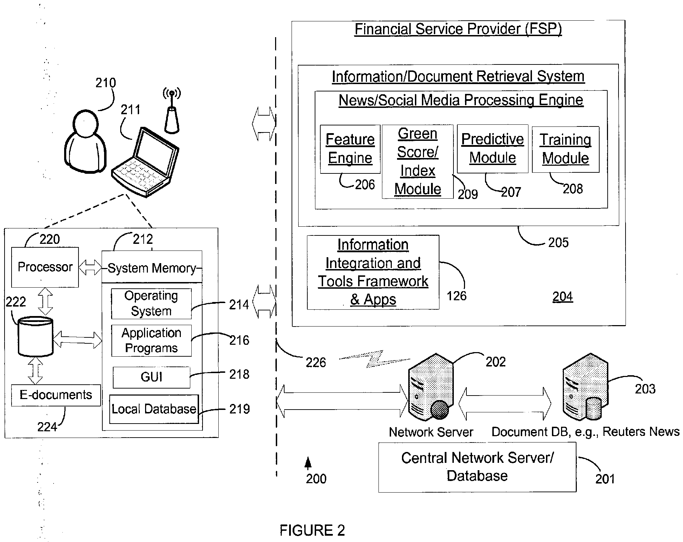

Information-integration-tools (IIT) framework or interface module 126 (or software framework or platform) includes machine readable and/or executable instruction sets for wholly or partly defining software and related user interfaces having one or more portions thereof that integrate or cooperate with one or more applications. As shown in Figure 2, NMAS includes a News/Social Media Processing Engine (NSMPE) that cooperates with IIT 126 and metadata module 116 and that includes or may cooperate with one or more search engines for receiving and processing against metadata and aggregating, scoring, and filtering, recommending, and presenting results. In the exemplary embodiment, NSMPE includes one or more feature engine 206, predictive modeling module 207, learning or training engine or module 208, and green scoring, composite index module 209 to implement the functionality described herein.

With reference to Fig. 1, access device 130, such as a client device, is generally representative of one or more access devices. In the exemplary embodiment, access device 130 takes the form of a personal computer, workstation, personal digital assistant, mobile telephone, or any other device capable of providing an effective user interface with a server or database. Specifically, access device 130 includes a processor module 131 one or more processors (or processing circuits) 131, a memory 132, a display 133, a keyboard 134, and a graphical pointer or selector 135. Processor module 131 includes one or more processors, processing circuits, or controllers. In the exemplary embodiment, processor module 131 takes any convenient or desirable form. Coupled to processor module 131 is memory 132. Memory 132 stores code (machine-readable or executable instructions) for an operating system 136, a browser 137, document processing software 138. In the exemplary embodiment, operating system 136 takes the form of a version of the Microsoft Windows operating system, and browser 137 takes the form of a version of Microsoft Internet Explorer. Operating system 136 and browser 137 not only receive inputs from keyboard 134 and selector 135, but also support rendering of graphical user interfaces on display 133. Upon launching processing software an integrated information-retrieval graphical-user interface 139 is defined in memory 132 and rendered on display 133. Upon rendering, interface 139 presents data in association with one or more interactive control features (or user-interface elements).

In one embodiment of operating a system using the present invention, an add-on framework is installed and one or more tools or APIs on server 120 are loaded onto one or more client devices 130. In the exemplary embodiment, this entails a user directing a browser in a client access device, such as access device 130, to Internet-Protocol (IP) address for an online information-retrieval system, such as offerings from Thomson Reuters Financial and other systems, and then logging onto the system using a username and/or password. Successful login results in a web-based interface being output from server 120, stored in memory 132, and displayed by client access device 130. The interface includes an option for initiating download of information integration software with corresponding toolbar plug-ins for one or more applications. If the download option is initiated, download administration software ensures that the client access device is compatible with the information integration software and detects which document-processing applications on the access device are compatible with the information integration software. With user approval, the appropriate software is downloaded and installed on the client device. In one alternative, an intermediary "firm" network server may receive one or more of the framework, tools, APIs, and add-on software for loading onto one or more client devices 130 using internal processes.

Once installed in whatever fashion, a user may then be presented an online tools interface in context with a document-processing application. Add-on software for one or more applications may be simultaneous invoked. An add-on menu includes a listing of web services or application and/or locally hosted tools or services. A user selects via the tools interface, such as manually via a pointing device. Once selected the selected tool, or more precisely its associated instructions, is executed. In the exemplary embodiment, this entails communicating with corresponding instructions or web application on server 120, which in turn may provide dynamic scripting and control of the host word processing application using one or more APIs stored on the host application as part of the add-on framework.

Figure 2 illustrates another representation of an exemplary NMAS system 200 for carrying out the herein described processes that are carried out in conjunction with the combination of hardware and software and communications networking. In this example, NMAS 200 provides a framework for searching, retrieving, analyzing, and ranking. NMAS 200 may be used in conjunction with a system 204 offering of a information or professional financial services provider (FSP), e.g., Thomson Reuters Financial, and include an Information Integration and Tools Framework and Applications module 126, as described hereinabove. Further, in this example, system 200 includes a Central Network Server/Database Facility 201 comprising a Network Server 202, a Database 203 of documents and information, from internal and/or external sources, e.g., news stories, blogs, social media, etc., an Information/Document Retrieval System 205 having as components a Feature building module 206, a Predictive module 207, a Training or Learning Module 208, and a News/Social Media Processing Engine comprising a green scoring, composite index engine 209,. The Central Facility 201 may be accessed by remote users 210, such as via a network 226, e.g., Internet. Aspects of the system 200 may be enabled using any combination of Internet or (World Wide) WEB-based, desktop-based, or application WEB-enabled components. The remote user system 210 in this example includes a GUI interface operated via a computer 211, such as a PC computer or the like, that may comprise a typical combination of hardware and software including, as shown in respect to computer 211, system memory 212, operating system 214, application programs 216, graphical user interface (GUI) 218, processor 220, and storage 222, which may contain electronic information 224 such as electronic documents and information, e.g., green score data stream and/or reports, company and/or industry-based, environmental composite index data stream and/or related reports and information. The methods and systems of the present invention, described in detail hereafter, may be employed in providing remote users, such as investors, access to a searchable database. In particular, remote users may search a database using search queries based on company RIC, a green-certified listing (as described elsewhere herein), stock or other name to retrieve and view predictive analysis and/or suggested action as discussed hereinbelow. RIC refers to Reuters instrument code, which are ticker-like codes used to identify financial instruments and indices, are used for looking up information on various financial information networks (like Thomson Reuters market data platforms, e.g., Bridge, Triarch, TIB and RMDS - Reuters Market Data System (RMDS) open data integration platform). A green certified listing may take the form of a "green-RIC" or the like. Client side application software may be stored on machine-readable medium and comprising instructions executed, for example, by the processor 220 of computer 211, and presentation of web-based interface screens facilitate the interaction between user system 210 and central system 211, such as tools for further analyzing the data streams and other data and reports received via network 226 and stored locally or accessed remotely. The operating system 214 should be suitable for use with the system 201 and browser functionality described herein, for example, Microsoft Windows Vista (business, enterprise and ultimate editions), Windows 7, or Windows XP Professional with appropriate service packs. The system may require the remote user or client machines to be compatible with minimum threshold levels of processing capabilities, e.g., Intel Pentium III, speed, e.g., 500 MHz, minimal memory levels and other parameters.

The configurations thus described are ones of many and are not limiting as to the invention. Central system 201 may include a network of servers, computers and databases, such as over a LAN, WLAN, Ethernet, token ring, FDDI ring or other communications network infrastructure. Any of several suitable communication links are available, such as one or a combination of wireless, LAN, WLAN, ISDN, X.25, DSL, and ATM type networks, for example. Software to perform functions associated with system 201 may include self-contained applications within a desktop or server or network environment and may utilize local databases, such as SQL 2005 or above or SQL Express, IBM DB2 or other suitable database, to store documents, collections, and data associated with processing such information. In the exemplary embodiments the various databases may be a relational database. In the case of relational databases, various tables of data are created and data is inserted into, and/or selected from, these tables using SQL, or some other database-query language known in the art. In the case of a database using tables and SQL, a database application such as, for example, MySQL™, SQLServer™, Oracle 8I™, 10G™, or some other suitable database application may be used to manage the data. These tables may be organized into an RDS or Object Relational Data Schema (ORDS), as is known in the art.

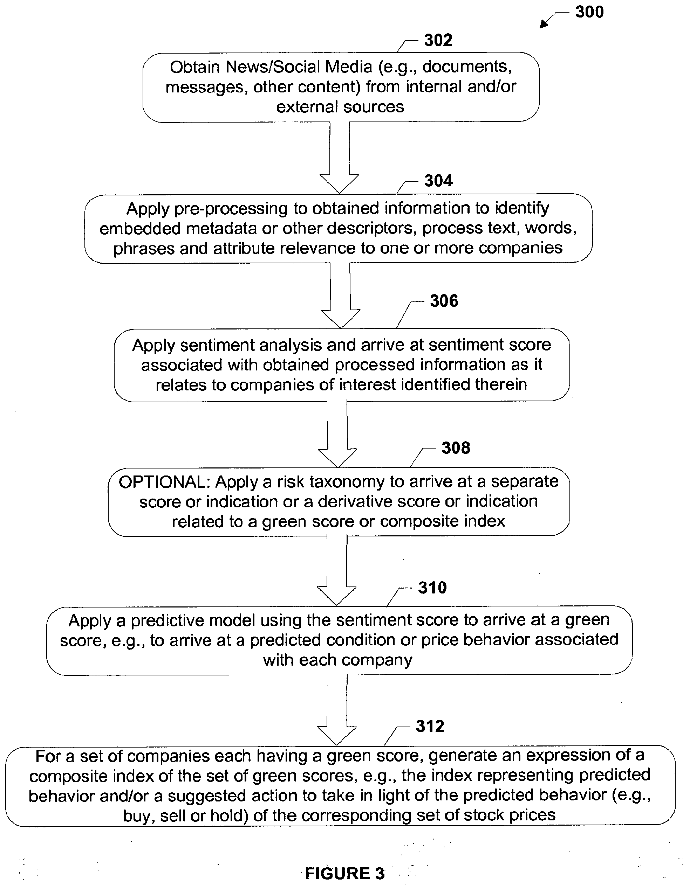

In one exemplary method of the present invention, and with reference to the flow of Figure 3, the following processes are performed. Initially, at step 302, a user obtains information and content of interest from suitable news/social media sources (news feeds, blogs, websites etc.) from internal or external sources. At step 304 the system applies preprocessing to obtained information to identify embedded metadata or other descriptors, process text, words, phrases and attribute relevance to one or more companies. At step 306, the system applies sentiment analysis and arrive at one or more sentiment scores associated with obtained and processed information as it relates to companies of interest identified therein. At step 308, the system optionally (as discussed elsewhere herein) may apply a risk taxonomy to arrive at a separate score or indication or a derivative score or indication related to a green score or composite index. At step 310, the system applies a predictive model using the sentiment score to arrive at a green score, e.g., to arrive at a predicted condition or price behavior associated with each company. At step 312, for a set of companies each having a green score, the system generates an expression of a composite index of the set of green scores, e.g., the index representing predicted behavior and/or a suggested action to take in light of the predicted behavior (e.g., buy, sell or hold) of the corresponding set of stock prices.

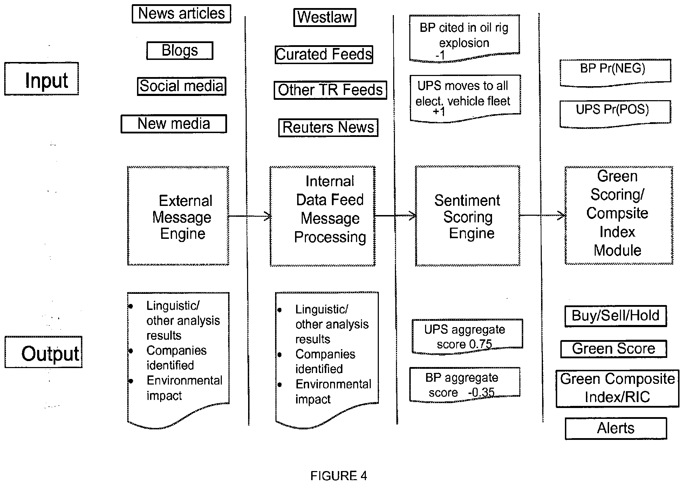

Figure 4 is a flow diagram illustrating database and document processing, sentiment and green scoring using predictive modeling aspects of the present invention as input and output of a system employing the present invention, such as the method of Figure 3. For instance, external document, news, social media and other information, such as news articles and traditional and new media sources, blogs, social media, is seen as an input to a news/social media processing engine, such as described above, that may include combined or separate external message engine and an internal data feed message engine. Internal news feeds and the like, e.g., TR Feeds, Reuters News, Westlaw, Curated feeds, are processed by an internal data feed document processing module. The combined news feeds are further processed by sentiment scoring engine and are ultimately processed in accordance with a predictive model to output green scoring for companies and/or a composite index related to the environmental performance or certification of a set of companies. In this manner the invention provides predictive analysis of respective companies or other outputs such as suggested actions (buy, sell or hold). Another output may be in the form of data streams or feeds related to the green scoring or composite index and may be delivered to subscribers of a financial service and further processed locally. Yet another output may be an intelligent alert service. Also, a desktop add-on may include ways to display the various outputs and/or receive inputs in response thereto.

Many efforts have been made by information-based companies to collect and/or analyze large corpus or universe of documents and information inclusive of traditional and new age media, blogs, webpages, etc. For example, webcrawlers and screen scrapers have been used to extract available information and data for subsequent processing and analysis, e.g., formatting/reformatting, structured/unstructured data. Companies may use this information to create or improve a corporate or product image or identity in the minds of customers, this is increasingly significant in the context of CSR and environmental responsibility. Systems that can discern from the information, e.g., text, any underlying "sentiment" or "opinion" represented by the expressions are very useful in forming predictive models. This is often referred to as sentiment or opinion mining and also as "sentic" or "affective" computing. These techniques often use natural language processing and are designed to recognize and interpret human sentiment (opinions, affects or emotions, e.g., happy, sad, scared, important, insignificant, positive, negative) and generate a response based on the human affect or emotion detected.

More particularly, semantic analysis interprets text to discern expressions of affect or opinion and may be used to generate results having semantic awareness. Such systems may be based on ontologies, e.g., a human emotion ontology (HEO), and linguistic resources, e.g., WordNet-Affect (WNA). By extending the use of systems beyond traditional news sources, NMAS can employ the techniques to interpret and process opinions and sentiments expressed in non-traditional outlets/sources, e.g., blogs, wikis, online fora, message boards, chat rooms, social media networks, etc., to determine a green sentiment and green score. With all media sources, but particularly "new media" sources lacking the historic verification internal processes, the system may also assign some level of verification as to the accuracy (actual or perceived (short-term)) of the message. In addition, the system may be configured to identify "false" news and to anticipate short-term effect of such "news" in predicting stock price behavior.

By way of example, the sentiment scoring function described herein may be performed by the Reuters NewsScope Sentiment Engine (RNSE). RNSE enables clients to leverage a unique set of news/social media sentiment, relevance, and novelty indicators for algorithmic trading systems as well as risk management and human decision support processes. The service utilizes a linguistic model which scores sentiment in milliseconds for news/social media on 40 commodity and energy assets in addition to over 10,000 companies supported in the current offering. Algorithmic trading is useful to both sell and buy-side market participants in the cash equity markets as well as other liquid asset classes such as foreign exchange, commodities and energy markets. Commodity markets offer significant opportunities for institutional investors and proprietary traders to grow and diversify investment strategies. Given the growth of the global commodities and energy markets, price volatility and increased adoption of this asset class into active trading strategies customer demand for relevant quantitative solutions is increasing. The sentiment scores and resulting green scores or composite index can be used by trading desks and quantitative research analysts to better model the movement of asset prices. Clients have access to historical data, which allows them to back-test the system's applicability for their trading and investment strategies.

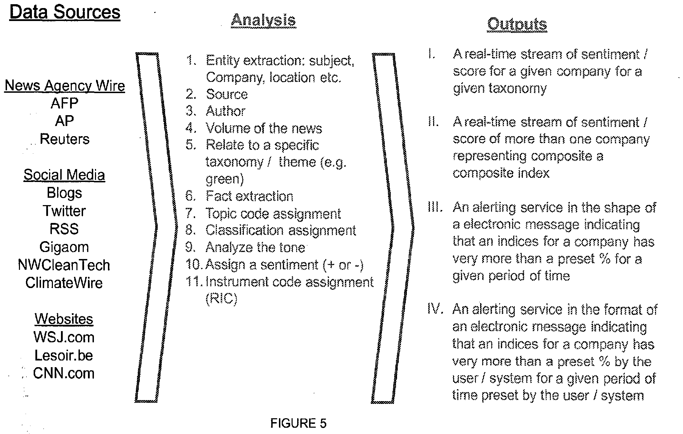

Figure 5 is a flow chart that represents steps in an exemplary method for producing a sentiment for use in green scoring, for example for greenness benchmarking of public and private companies using social media and news content. The exemplary sources of data for processing by NMAS 100 includes: New Agency Wire sources (e.g., AFP, AP, TR, Reuters, Bloomberg), Social Media (blogs, twitter, RSS, Gigaom, NWCleanTech, ClimateWire), and Internet/Web-based sources (e.g, CNN.com, WSJ.com, lesoir.be). In today's environment, social media often provides more timely sources of information than traditional news outlets. For example, a blogger may post a comment about "Company A", which comment and further commentary are picked up on social media sources before finally being mentioned in syndicated and traditional news stories/sources. This seems to be particularly true in the case of "green" issues and content. By examining social media-based sentiment the present invention is more responsive to predicting behavior of companies and stock prices in respect to green issues. In the example of Figure 5, the following analysis is performed: Entity extraction (e.g., subject, company, location, etc.), Source, Author, Volume of the news, Relate to a specific taxonomy/theme (e.g. green), Fact extraction, Topic code assignment, Classification assignment, Analyze the tone, Assign a sentiment (+ or -), Instrument code assignment (e.g., RIC, green-RIC). Outputs resulting from analysis of the sourced data may take any of the following forms for delivery: a real-time stream (and historical database) of sentiment/score for a given company for a given taxonomy; a real-time stream (and historical database) of sentiment/score of more than one company representing composite a composite index; an alerting service in the shape of a electronic message indicating that an indices for a company has very more than a preset % for a given period of time; and/or an alerting service in the format of an electronic message indicating that an indices for a company has very more than a preset % by the user/system for a given period of time preset by the user/system. The recipient of the output deliverable may then further process the output as desired.

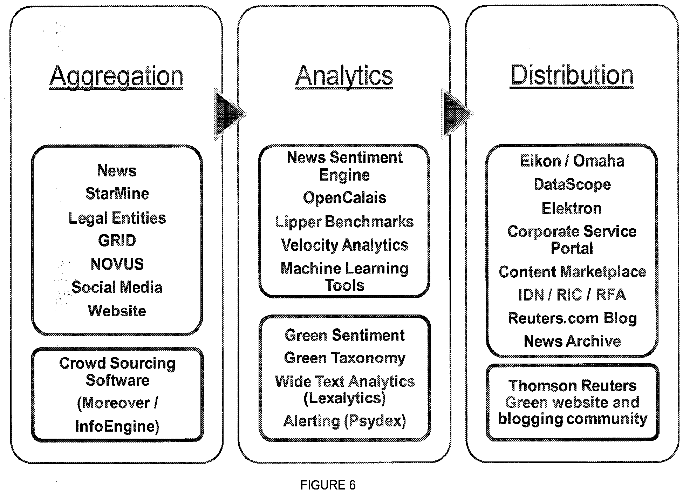

Figure 6 is a chart that represents an expression of a green community in the form of a website. The community may include access and leveraging of existing resources and tools. For example, the community includes aggregating assets, analytics and tools assets, and distribution assets to provide a robust and effective experience to users, such as investors and those in the investing community. In this example, the aggregation assets include: News; StarMine; Legal Entities; GRID; NOVUS; Social Media; Website; Crowd Sourcing Software; Moreover/InfoEngine. The analytics assets may include: News Sentiment Engine; OpenCalais; Lipper Benchmarks; Velocity Analytics; Machine Learning Tools ; Green Sentiment; Green Taxonomy; Wide Text Analytics (Lexalytics); and Alerting (Psydex). Distribution assets may include: Eikon/Omaha; DataScope; Elektron; Corporate Service Portal; Content Marketplace; IDN/RIC/RFA; Reuters.com Blog; News Archive; Green website(s) and blogging community.

Using the NMAS 100 system and related techniques described herein, the invention addresses a broad set of needs by providing intelligent information and analytic tools to monitor and predict the impact of green behavior at the company and index level. The invention may be used to access a historical database of green news tagged to individual companies, track real-time alerts on breaking news with relevant green scoring, monitor social media sources and track green initiatives or events, issue/receive green sentiment scores for different companies, and leverage community tools to monitor peer behavior. Green asset managers may use the invention to implement and monitor adherence to green investment objectives and requirements and to identify alpha generating strategies. Corporations may use the invention in more inward-directed manner for brand monitoring and for implementing and evaluating CSR and other related initiatives. Regulators, e.g., Environmental Protection Agency, may use the invention for monitoring and surveillance of green compliance and for inputs into green legislation.

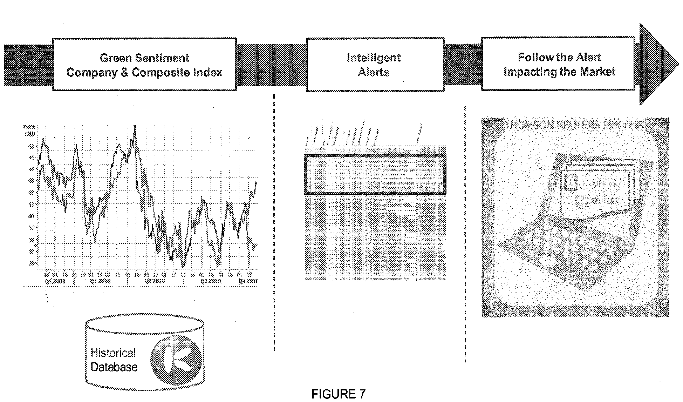

Now with reference to Figure 7, and in context of the Green Sentiment Composite Index aspect of the present invention, NMAS 100 may have as its core foundation a combination of machine learning and Artificial Intelligence (AI) capabilities that provide intelligent information for use in analyzing impact of green behavior of public and private companies. The resulting output of NMAS 100 may be in the form of a Green Sentiment Company & Composite Index, Intelligent alerts, and/or desktop client/interface and tool set. NMAS 100 may utilize a highly specialized taxonomy geared towards scoring environmental topics relevant to companies and industries. Every source will have its own nuanced taxonomy and weighting for the index calculation, e.g., by Velocity Analytics. Once operational, AI can adapt to changing market conditions and expand the taxonomy to include newly developing lingo and highlight patterns of text that are most correlated with equity price movements. In implementation, the invention may provide a classification for green investing, green alerts in the SEC may be triggered, investors may trade based on the green-RIC or classification, social media components added to overall green-investment community, and green data feeds may be delivered for further processing by investors.

Services such as InfoEngine provide out-of-the-box aggregation of twitter, blogs, online news feeds, and other types of third party content. For example, a content aggregator such as InfoEngine, a calculation engine such as Lexalytics, and a community website. Once fed into servers, OpenCalais / ClearForest, e.g., will be utilized for smart tagging, which helps distinguish between feeds. Once the taxonomy and corresponding algorithms are applied, a calculation engine (such as Lexalytics) will then score the articles.

Sentiment scores from different sources will be weighted based on their importance. Widely circulated online and newswire sources will be weighted based on their Alexa and Nielsen ratings, whereas social media sources will be weighted based on their followers, subscribers, and impressions. Weighted scores will then be aggregated to provide the overall "green sentiment." Similar to the evolution of the taxonomy, weights may change as AI detects higher correlation of sources with a company's equity price. Lastly, building a community website will facilitate the green social media debate and will be leveraged to maintain the green taxonomy.

### RISK MINING

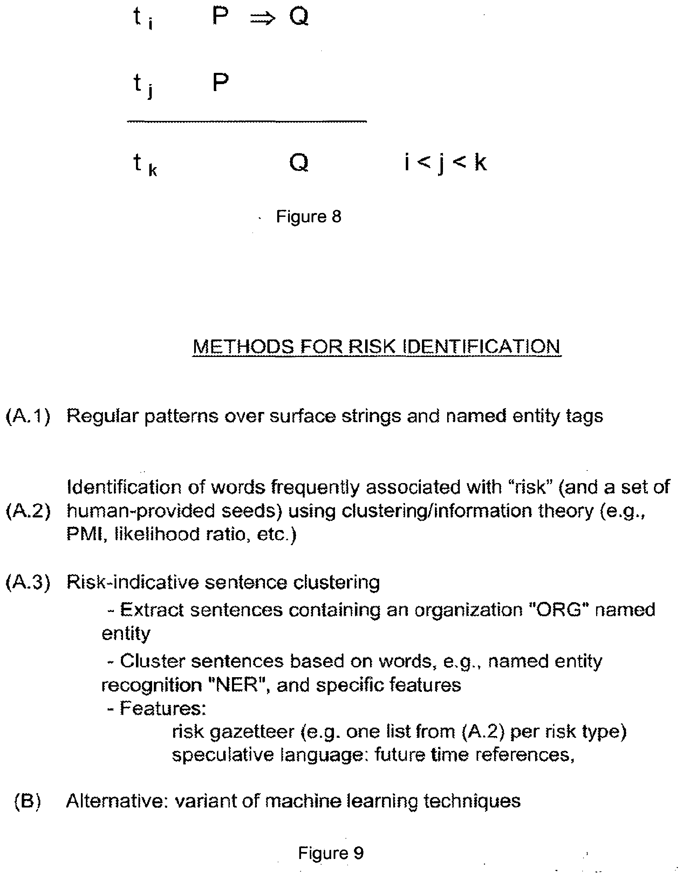

Figures 8-16 are examples of risk mining techniques for use in implementing the present invention. The following is a more full description of risk mining techniques for use in conjunction with the present invention.

FIG. 8 illustrates how a risk materializes over time. Initially, a Risk, P=>Q, is extracted from a large textual database at time where Q stands for a high-impact event and P stands for a prerequisite of Q which is causally or statistically connected to Q by and precedes Q in time. Unless otherwise stated or indicated herein, the implication symbol "=>" captures the causality and/or enablement relation holding between P and Q (e.g., P causes Q, or P is likely to enable Q). The implication symbol "=>" is not meant to be a material implication. Later at time, t.sub.j, P might happen, which in turn may lead to Q occurring at time t.sub.k. The present invention solves the problem of obtaining risks P=>Q automatically from text and describes how P=>Q and P may be used to alert a user that Q may be imminent. As used herein, the term risk, which may be positive or negative, refers to an event involving uncertainty unless the event has occurred, which may result from a factor, thing, element, or course. In particular, as used herein, the term risk, which may be positive or negative, refers to where a prerequisite for an event where the prerequisite is causally or statistically connected to the event and precedes the event in time. As used herein, the term prerequisite refers to a statement or an indication relating to a particular subject. In particular, the term prerequisite refers to statement or an indication relating to a particular event, either directly or thought the mining techniques of the present invention.

A corpus, for example a set(s) of textual feed(s), is mined for risk through use of a computing device. As used herein, the term corpus and it variants refer to a set or sets of data, in particular digital data including textual data. The corpus may include, but is not limited to, news; financial information, including but not limited to stock price data and its standard derivation (volatility); governmental and regulatory reports, including but not limited, to government agency reports, regulatory filings such as tax filings, medical filings, legal filings, Food and Drug Administration (FDA) filings, Security and Exchange Commission (SEC) filings; private entity publications, including but not limited to, annual reports, newsletters, advertising and press releases; blogs; web pages; event streams; protocol files; status updates on social network services; emails; Short Message Services (SMS); instant chat messages; Twitter tweets; and/or combinations thereof. The .computing device surveys corpus to extract risk-indicating patterns and to seed the risk-identification-algorithm with risk-indicative seed patterns for subsequent risk mining by an analyst or user. The computing device may further include an interface for querying the computer, such as a keyboard, and a display for displaying results from the computer.

The computing device may also be used to alert users through a computer interface (not shown) of risks, including but not limited to imminent risks, i.e., risks that are likely to occur including, but not limited to, likely to occur in the near future or a defined time period. Typically, the users are alerted via a computing device (not shown). The present invention, however, is not so limited, and any device having a visual display or even a voice communication may suitably be used. As used herein, the term "computing device" refers to a device that computes, especially a programmable electronic machine that performs highspeed mathematical or logical operations or that assembles, stores, correlates, or otherwise processes information. Examples include, without limitation, mainframe computers, personal computers and handheld devices. Before mining the corpus for risk, the present invention utilizes the computing device to extract risk-indicating patterns from corpus or corpora of textual data. As used herein, risk-indicating patterns are patterns developed through the techniques of the present invention which relate possible prerequisites to possible events.

The computing device contains a risk-identification-algorithm. With the computing device containing the risk-identification-algorithm, a corpus of textual data is searched for instances of a set of risk-indicative seed patterns provided to create a risk database, which is done by a risk miner. The corpus may include, but is not limited to, news; financial information, including but not limited to stock price data and its standard derivation (volatility); governmental and regulatory reports, including but not limited, to government agency reports, regulatory filings such as tax filings, medical filings, legal filings, Food and Drug Administration (FDA) filings, Security and Exchange Commission (SEC) filings; private entity publications, including but not limited to, annual reports, newsletters, advertising and press releases; blogs; web pages; event streams; protocol files; status updates on social network services; emails; Short Message Services (SMS); instant chat messages; Twitter tweets; and/or combinations thereof. The corpus 210 may be the same as corpus 110 or may be different.

In one embodiment of the invention, trigger keywords are used (e.g. "risk", "threat") to generate the risk database. In another embodiment, regular expressions are used (e.g. "("may")? pose(s)? (a)? threat(s)? to") to generate the risk database. Candidate risk sentences or sentence sequences are created, and new patterns are generalized by running a named entity tagger or Part of Speech (POS) tagger, and chunker (entities can be described by proper nouns or NPs, and not just given by named entities) over it, and by substituting entities by per-class placeholder (e.g. "J.P. Morgan"=>"<COMPANY>"). These generated patterns can be used for re-processing the corpus, in one embodiment of the present invention after some human review, or automatically in another embodiment. The extracted sentences or sentence sequences are then both validated (whether or not they are really risk-indicating sentences) and parsed into risks of the form P=>Q (i.e. finding out which text spans correspond to the precondition "P", which parts express the implication "=>", and which parts express the high-impact event "Q"), using, but not limited to, the following nonlimiting features: a set of terms with significant statistical association with the term "risk" (in one embodiment of this invention, statistical programs, such as Pointwise Mutual Information (PMI) and Log Likelihood, or rules, including but not limited to rules obtained by Hearst pattern induction, may be used to determine the set of terms); a set of binary gazetteer features, where the feature fires if a gazetteer a set of risk-indicative terms ("threat", "bankruptcy", "risk",...) compiled by human experts or extracted from hand-labelled training data; a set of indicators of speculative language; instances of future time reference; occurrences of conditionals; and/or occurrences of causality markers.

In one embodiment of the present invention, a variant of surrogate machine-learning (i.e., technology for machine learning tasks by examples) may be used to create training data for a machine-learning based classifier that extracts risk-indicative sentences. One useful technique is described by Sriharsha Veeramachaneni and Ravi Kumar Kondadadi in "Surrogate Learning--From Feature Independence to Semi-Supervised Classification", Proceedings of the NAACL HLT Workshop on Semi-supervised Learning for Natural Language Processing, pages 10-18, Boulder, Colo., June 2009. Association for Computational Linguistics (ACL), the contents of which is incorporated herein by reference.

A risk type classifier classifies each risk pattern by risk type ("RT"), according to a pre-defined taxonomy of risk types. In one embodiment of the present invention, this taxonomy may use, but not limited to, the following non-limiting classes: Political: Government policy, public opinion, change in ideology, dogma, legislation, disorder (war, terrorism, riots); Environmental: Contaminated land or pollution liability, nuisance (e.g. noise), permissions, public opinion, internal/corporate policy, environmental law or regulations or practice or 'impact' requirements; Planning: Permission requirements, policy and practice, land use, socio-economic impact, public opinion; Market: Demand (forecasts), competition, obsolescence, customer satisfaction, fashion; Economic: Treasury policy, taxation, cost inflation, interest rates, exchange rates; Financial: Bankruptcy, margins, insurance, risk share; Natural: Unforeseen ground conditions, weather, earthquake, fire, explosion, archaeological discovery; Project: Definition, procurement strategy, performance requirements, standards, leadership, organization (maturity, commitment, competence and experience), planning and quality control, program, labor and resources, communications and culture; Technical: Design adequacy, operational efficiency, reliability; Regulatory: Changes by regulator; Human: Error, incompetence, ignorance, tiredness, communication ability, culture, work in the dark or at night; Criminal: Lack of security, vandalism, theft, fraud, corruption; Safety: Regulations, hazardous substances, collisions, collapse, flooding, fire, explosion; and/or Legal: Changes in legislations, treaties.

A risk clusterer groups all risks in the database by similarity, but without imposing a pre-defined taxonomy (data driven). In one embodiment Hearst pattern induction may be used. Hearst pattern induction was first mentioned in Hearst, Marti, "WordNet: An Electronic Lexical Database and Some of its Applications", (Christiane Fellbaum (Ed.)), MIT Press 1998, the contents of which is incorporated herein by reference. In another embodiment of the present invention a number k is chosen by the system developer, and the kNN-means clustering method may be used. Further details of kNN clustering is described by Hastie, Trevor, Robert Tibshirani and Jerome Friedman, "The Elements of Statistical Learning: Data Mining, Inference, and Prediction", Second Edition Springer (2009), the content of which is incorporated herein by reference. In such a case, the risks are grouped into a number, i.e. k, of categories and then classified by choosing the cluster with the highest similarity to a cluster of interest. In another embodiment of the present invention, hierarchical clustering is used. Alternatively or in addition to, both k-means clustering and hierarchical clustering may be used.

In one embodiment of the risk clusterer according to the present invention, a text corpus is provided. The text corpus is tokenized into a set of sentences. All instances of a risk, which is indicated by "*", is extracted from the tokenized text. A taxonomy of risks is constructed into a tree by organizing all fillers matching the risk, i.e."*". Hearst pattern induction may be used to induce the risk taxonomy. Further, an NP chunker may be used to find the boundaries of interest.

In another embodiment of the risk clusterer according to the present invention, a risk taxonomy is created from, for example risks, legal risks and legal changes. Risks, such as those that may be associated with legal changes, are seeded, as indicated by. Legal risks, such as legal changes, are mined by the computing device, as indicated by. Risks are also mined for legal risks, as indicated by. In such a manner there is feedback for the legal risks based on the risks and the legal changes. The mining of the risks and the legal risks may include mining with the word risk or an equivalent thereto. The mining of the legal changes does not necessarily include the word risk. Advantageously, the taxonomy resulting from this process contains risk-indicative phrases that do not necessarily contain the word "risk" itself. Such taxonomy may be used in the risk-mining patterns in addition to their use for risk-type classification.

A risk alerter performs a similarity matching operation between the risks in the database and likely instances of P or Q in a textual feed 110. If evidence for P is found, the risk P=>Q is "imminent". If evidence for Q is found, the risk P=>Q has materialized. In one embodiment of the present invention, the risk alerter passes warning notifications to a user directly.

As a result, when inspecting the risk database the user (e.g. a risk analyst) can take immediate action before the risk materialises and increase the priority of the management of imminent risks ("P!, ... , P!, P!, P!,... P! ... ") in the textual feed and materialized risks ("Q!") as events unfold, without having to even read the textual feeds.

In one embodiment of the present invention, the output of the risk alerter is connected to the input of a risk routing unit, which notifies an analyst whose profile matches the risk type RT. For example, an analyst may want to know about environmental risks. The risk alerter would alert the analyst about an environmental risk when a prerequisite of a possible environmental event is mined. For example, the analyst may be altered to an environmental risk of global warming when industrial activity increases in a particular country or region.

In one embodiment of the present invention a set of risk descriptions as extracted from the corpus defined as the set of all past Security Exchange Commission ("SEC") filings is matched to the risks extracted from the textual feed. The method proposes one risk description or a ranked list of alternative risk descriptions for inclusion in draft SEC filings for the company operating the system, in order to ensure compliance with SEC business risk disclosure duties.

The present invention may use a variety of methods for risk identification. For example, as depicted in FIG. 9, risk mining may include baseline monitoring of regular patterns over surface strings and named entity tags; identification of words frequently associated with risk using clustering information theory; and/or risk-indicative sentence clustering. Alternatively or in addition to, technology for machine learning of tasks by example may be used. The risk identification includes the querying of a corpus or corpora for risk indicating patterns. The query result may match all, substantially all or some of the risk indicating patterns. The number of occurrences or particular risk indicating patterns may also be used in the risk mining techniques of the present invention.

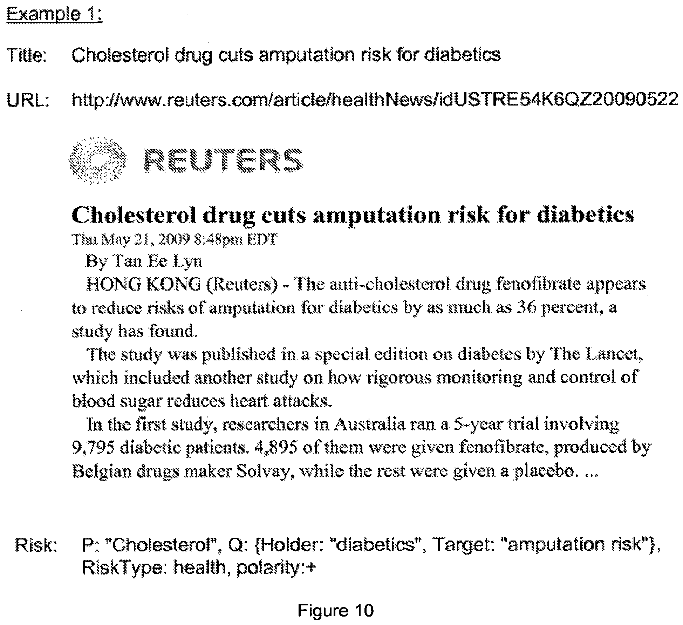

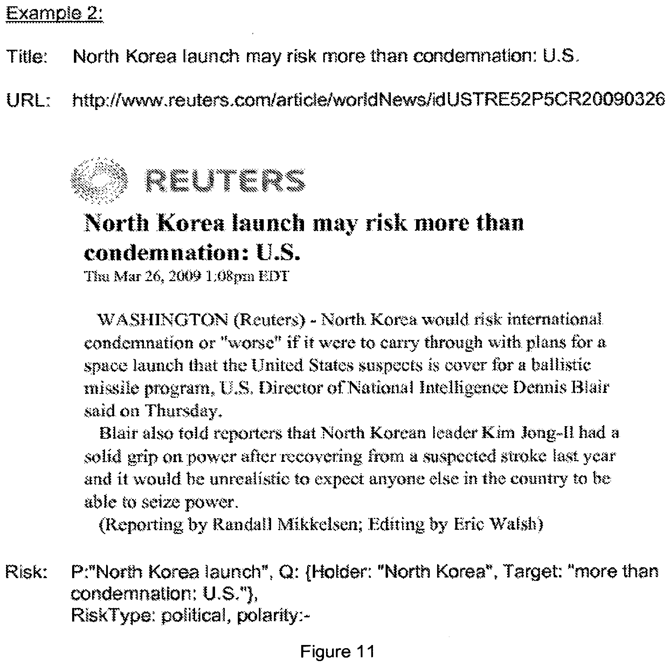

FIGS. 10 and 11 illustrate examples of risk mining according to the present invention. In Example 1 of FIG. 10, the corpus, including the listed news article, is mined for the term "cholesterol" as P or a prerequisite of Q or an event. The event Q is further classified by a holder "diabetics" and a target "amputation risk". The Risk Type RT is health and has a positive polarity as being beneficial to health. For purposes of the present invention, the term risk not only refers to negative or harmful events, but also may refer to positive or beneficial results. In other words, a risk may have a positive impact and/or a negative impact. In Example 2 of FIG. 11, the corpus, including the listed news article, is mined for the phrase "North Korea launch" as P or a prerequisite of Q or an event. The event Q is further classified by a holder "North Korea" and a target "more than condemnation" U.S.". The Risk Type RT is political and has a negative polarity as being harmful to world politics. Moreover, such negative and/or positive polarities may also be weighted for degree of the risk. In such a case it may be beneficial to alter the user 130 to a very harmful or very beneficial risk to a greater degree for a less consequential risk.

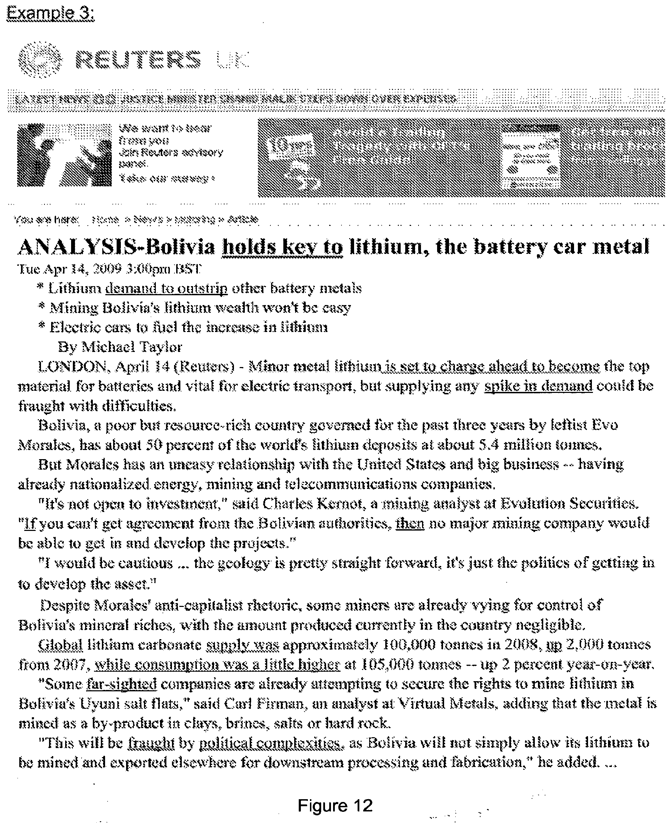

FIG. 12 illustrates another example of risk mining according to the present invention. In Example 3, the news article is mined. As background, demand for the metal lithium is increasing with limited supplies being available. Much of the metal is obtained from Bolivia, which at the time of this article has a government which may be viewed by some not to be friendly to capitalistic governments or businesses. The article is mined for a variety of potential words, sequences of words, and/or partial phrases to query the article for prerequisite P of events Q which may lead to risk, as indicated by the underlined words and/or sequences. The risk types present in the article include supply-demand risk and political risk.

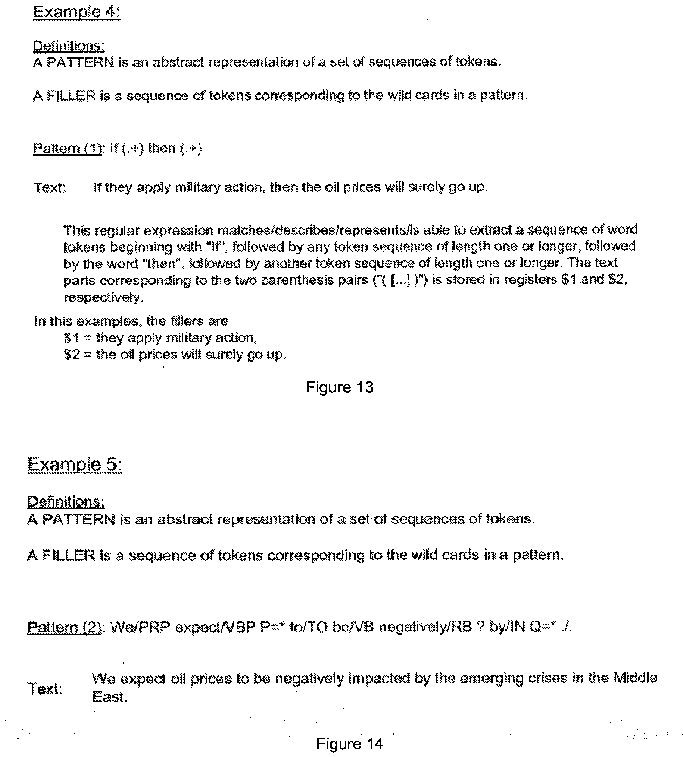

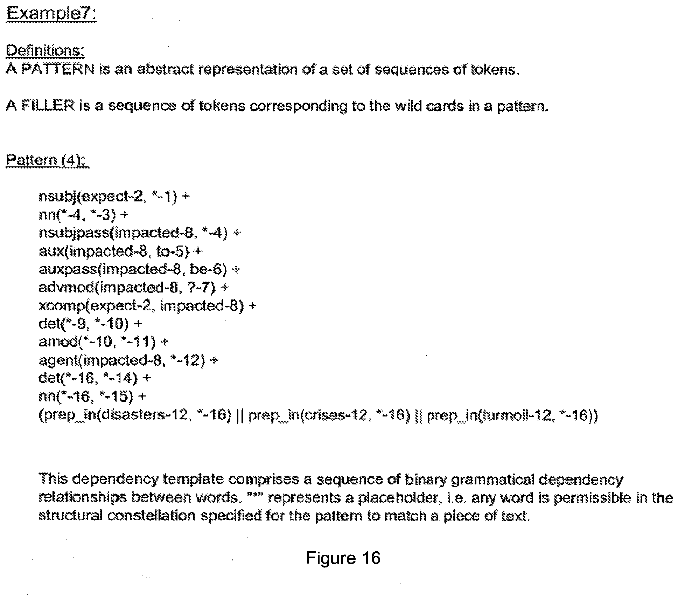

FIG. 13 illustrates another example of risk mining according to the present invention. In Example 4a corpus is mined for a pattern having specific tokens, i.e., "if" and "then". The mining extracts sequences beginning or having these tokens. The length of the sequence is not limited to any particular length or number of words, but is determined by tokens. The sequences are stored in registers, for example in the computing device. The use of patterns, however, such as, but not limited to those shown in FIG. 16, may be more precise than using a keyword-based ranked retrieval.

FIG. 14 illustrates another example of risk mining according to the present invention. In Example 5a corpus is mined according to syntax or the grammatical structure of sentences or phrases. In this example normal PENN Treebank classes or tags or slightly modified PENN tags are used. Further details of Penn Treebank may be found at http://www.cis.upenn.edu/.about.treebank/ (PENN Treebank homepage), the contents of which is incorporated herein by reference, or by contacting Linguistic Data Consortium, University of Pennsylvania, 3600 Market Street, Suite 810, Philadelphia, Pa. 18104. For languages other than English, corresponding tagsets have been established and are known to one of ordinary skill in the art. In this example the tag "PRP" refers to a personal pronoun, i.e., "we" in the example sentence. The tag "VBP" refers a non-third person singular present tense verb, i.e. "expect" in the example sentence. The tag "TO" simply refers to the word "to" in the example sentence. The "VB" tag refers to a base form verb, i.e. "be" in the example sentence. The "RB" tag refers to an adverb, i.e., "negatively" in the example sentence. The "IN" tag refers to a preposition or subordinating conjunction, i.e. "by" in the example sentence. Some of the common PENN Treebank word P.O.S. tags include, but are not limited to, CC--Coordinating conjunction; CD--Cardinal number; DT--Determiner; EX--Existential there; FW--Foreign word; IN--Preposition or subordinating conjunction; JJ--Adjective; JJR-Adjective, comparative; JJS--Adjective, superlative; LS--List item marker; MD--Modal; NN--Noun, singular or mass; NNS--Noun, plural; NNP--Proper noun, singular; NNPS--Proper noun, plural; PDT--Predeterminer; POS--Possessive ending; PRP--Personal pronoun; PRP$-Possessive pronoun (prolog version PRP-S); RB--Adverb; RBR--Adverb, comparative; RBS--Adverb, superlative; RP--Particle; SYM--Symbol; TO--to; UH--Interjection; VB--Verb, base form; VBD--Verb, past tense; VBG--Verb, gerund or present participle; VBN--Verb, past participle; VBP--Verb, non-3rd person singular present; VBZ--Verb, 3rd person singular present; WDT--Wh-determiner; W--Wh-pronoun; WP$--Possessive wh-pronoun (prolog version WP-S); and WRB--Wh-adverb.

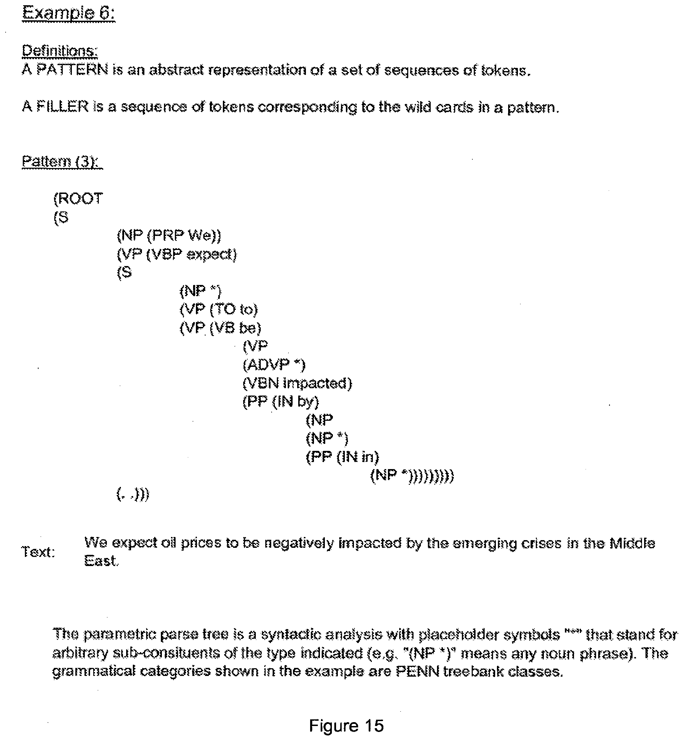

In FIG. 15, Example 6 illustrates another mining sequence or algorithm based on PENN treebank tags. Thus, as shown in FIGS. 14 and 15, the mining techniques of the present invention may analyze the same sentence under different criteria to obtain risks or prerequisites for risks.

In FIG. 16, risk mining according to the present invention is accomplished by a sequence of binary grammatical dependency relationships between words, including placeholders.

The above-described examples and techniques for mining risks may be used individually or in any combination. The present invention, however, is not limited to these specific examples and other patterns or techniques may be used with the present invention. The mined patterns from these examples and/or from the techniques of the present invention may be ranked according to ranking algorithms, such as but not limited to statistical language models (LMs), graph-based algorithms (such as PageRank or HITS), ranking SVMs, or other suitable methods.

In one aspect of the present invention a computer implemented method for mining risks is provided. The method includes providing a set of risk-indicating patterns on a computing device; querying a corpus using the computing device to identify a set of potential risks by using a risk-identification-algorithm based, at least in part, on the set of risk-indicating patterns associated with the corpus; comparing the set of potential risks with the risk-indicating patterns to obtain a set of prerequisite risks; generating a signal representative of the set of prerequisite risks; and storing the signal representative of the set of prerequisite risks in an electronic memory. The method may further include determining an imminent risk from the prerequisite risks, the imminent risk being determined using the risk-identification-algorithm, the imminent risk being associated with at least one risk from the set of prerequisite risks; generating a signal representative of the imminent risk; and storing the signal representative of the imminent risk in the electronic memory. Still further, the method may further include, after storing the signal representative of the set of prerequisite risks, determining a materialized risk, the materialized risk being determined using the risk-identification-algorithm, the materialized risk being associated with the set of risks; generating a signal representative of the materialized risk; and storing the signal representative of the materialized risk in the electronic memory. Moreover, the method may still further include, after storing the signal representative of the imminent risk, determining a materialized risk, the materialized risk being determined using the risk-identification-algorithm, the materialized risk being associated with the imminent risk; generating a signal representative of the materialized risk; and storing the signal representative of the materialized risk in the electronic memory.

Desirably, the corpus is digital. The corpus may include, but is not limited to, news; financial information, including but not limited to stock price data and its standard derivation (volatility); governmental and regulatory reports, including but not limited, to government agency reports, regulatory filings such as tax filings, medical filings, legal filings, Food and Drug Administration (FDA) filings, Security and Exchange Commission (SEC) filings; private entity publications, including but not limited to, annual reports, newsletters, advertising and press releases; blogs; web pages; event streams; protocol files; status updates on social network services; emails; Short Message Services (SMS); instant chat messages; Twitter tweets; and/or combinations thereof.

The risk-identification-algorithm may be based upon various factors and/or criteria. For example, the risk-identification-algorithm may be based upon, but not limited to, a set of terms statistically associated with risk; upon a temporal factor; upon a set of customized criteria, etc. and combinations thereof. The set of customized criteria may include and/or take into account of, for example, an industry criterion, a geographic criterion, a monetary criterion, a political criterion, a severity criterion, an urgency criterion, a subject matter criterion, a topic criterion, a set of named entities, and combinations thereof.

In one aspect of the present invention, the risk-identification-algorithm may be based upon a set of source ratings. As used herein, the phrase "source ratings" refers to the rating of sources, for example, but not limited to, relevance, reliability, etc. The set of source ratings may have a one to one correspondence with a set of sources. The set of sources may serve as a source of information on which the corpus is based. The set of source ratings may be modified based upon an imminent risk, a materialized risk, and combinations thereof.

The method of the present invention may further include transmitting the signal representative of the set of prerequisite risks, transmitting the signal representative of the imminent risk, transmitting the signal representative of the materialized risk, and combinations thereof. Moreover, the present invention may further include providing a web-based risk alerting service using at least one of the signal representative of the set of risks, the signal representative of the imminent risk, the signal representative of the materialized risk, and combinations thereof.

In another aspect of the present invention a computing device may include an electronic memory; and a risk-identification-algorithm based, at least in part, on the set of risk-indicating patterns associated with a corpus stored in the electronic memory. A processor (not shown) may be used to run the algorithm on the computer device. The computing device may include a computer interface, which is depicted, but not limited to, a keyboard, for querying the risk-identification-algorithm. The computing device may include a display for receiving a signal from the electronic memory and for displaying risk alerts from the risk-identification-algorithm.

In another aspect of the present invention, a computer system is provided for alerting a user of risks. The system may include a computing device having an electronic memory and a risk-identification-algorithm based, at least in part, on the set of risk-indicating patterns associated with a corpus stored in the electronic memory. A processor may be used to run the algorithm on the computer device. The system may further include a user interface for querying the risk-identification-algorithm and for receiving a signal from the electronic memory of the computing device for alerting a user of risks. The user interface may include, but is not limited to, a computer, a television, a portable media device, and/or a web-enabled device, such as a cellular phone, a personal data assistant, and the like.

In implementation, the inventive concepts may be automatically or semiautomatically, i.e., with some degree of human intervention, performed. Also, the present invention is not to be limited in scope by the specific embodiments described herein. It is fully contemplated that other various embodiments of and modifications to the present invention, in addition to those described herein, will become apparent to those of ordinary skill in the art from the foregoing description and accompanying drawings. Thus, such other embodiments and modifications are intended to fall within the scope of the following appended claims. Further, although the present invention has been described herein in the context of particular embodiments and implementations and applications and in particular environments, those of ordinary skill in the art will appreciate that its usefulness is not limited thereto and that the present invention can be beneficially applied in any number of ways and environments for any number of purposes. Accordingly, the claims set forth below should be construed in view of the full breadth and spirit of the present invention as disclosed herein.

## Claims

1. A computer implemented method for near real-time processing of data to derive one or more outputs for action by a user for integrating server-based information processing services in a client-side application, the method comprising:
(a) integrating a set of server-based tools on a computer by an information integration and tools framework into an application on a client access device, wherein the server-based tools are presented in the application on the client access device in a web-based interface accessed through corresponding toolbar plug-ins in the application;
(b) identifying by the computer an entity to which a green score will be assigned;
(c) identifying and collecting by the computer a set of social media information related to the identified entity from a plurality of data sources over a network connection;
(d) performing by the computer a sentiment analysis on the set of social media information related to the identified entity, the sentiment analysis including a text based sentiment analysis of the first set of social media information;
(e) providing a set of risk-indicating patterns on a computing device, wherein each pattern represents a set of sequences of tokens;
(f) identifying by the computer within the set of social media information a set of potential risks associated with the entity by using a risk-identification-algorithm based, at least in part, on the set of risk-indicating patterns and a filler sequence corresponding to a set of wildcards in the set of risk indicating patterns, wherein each filler is a sequence of tokens corresponding to the wildcards in a pattern;
(g) determining by the computer a sentiment score based at least in part on the performed sentiment analysis including the text based sentiment analysis and in part on the identified set of potential risks;
(h) calculating by the computer the green score based at least in part upon the determined sentiment score and a predictive model as applied to the determined sentiment score, and wherein the green score represents a green sentiment score;
(i) transmitting by the computer the green score to the client access device for presentation in the web-based interface in the application on the client access device;
(j) subsequently performing by the computer a sentiment analysis on a second set of social media information related to the identified entity, the sentiment analysis including a text based sentiment analysis of the first set of social media information;
(k) determining by the computer a second sentiment score based at least in part on the performed sentiment analysis including the text based sentiment analysis; and
(l) calculating by the computer an adjusted green score based at least in part upon the determined second sentiment score and a predictive model as applied to the determined second sentiment score, and wherein the adjusted green score represents an adjusted green sentiment score, wherein the adjusted green score is transmitted to the client access device for presentation in the web-based interface in the application on the client access device, and wherein at least one user-selectable element, associated with a server-based tool adapted to enter a user-directed command related to the adjusted green score, is presented in the web-based interface.

2. The method of claim 1 further comprising modifying by a computer the green score over time based on an additional set of social media information and transmitting a modified green score.

3. The method of claim 1, wherein calculating by a computer the green score includes:
identifying by a computer text in a set of content received from a set of social media, the text identified as representing the entity;
determining by a computer a sentiment score based at least in part on a text based sentiment analysis of the identified text; and
wherein the green score represents a green sentiment score.

4. The method of claim 1 further comprising performing by a computer steps (a)-(I) for a second identified entity resulting in a second green score, and wherein transmitting the green score comprises transmitting by a computer a data feed including data reflecting the green score and the second green score.

5. The method of claim 1 further comprising generating by a computer an alert signal concerning the entity based at least in part on the value of the calculated green score.

6. The method of claim 1, wherein identifying by a computer an entity further comprises identifying by a computer text in a set of content received from a set of social media, the text identified as representing the entity, and further comprising extracting by a computer further text from the set of content identified as representing a sentiment related to an environmental impact of the entity.

7. The method of claim 6 wherein identifying by a computer text in a set of content includes one or more of: identifying by a computer embedded metadata or other descriptors; processing by a computer text, words, phrases; applying by a computer natural language linguistics analysis; applying by a computer Bayesian techniques.

8. The method of claim 1 further comprising:
(m) identifying by a computer a set of companies to be associated with a composite index, the set of companies including the entity and being associated with a set of securities;
(n) based at least in part upon the set of social media information, generating by a computer a composite environmental index for the set of securities; and
(o) transmitting by a computer a signal associated with the composite environmental index.

9. The method of claim 1 wherein the entity is associated with a security traded on a market and further comprising applying by a computer a predictive model to arrive at a predicted behavior associated with the security.

10. The method of claim 9 further comprising generating by a computer an expression of the predicted behavior and/or a suggested action to take in light of the predicted behavior.

11. The method of claim 1 further comprising:
comparing by a computer the set of potential risks with the risk-indicating patterns to obtain a set of prerequisite risks;
generating by a computer a signal representative of the set of prerequisite risks; and
storing by a computer the signal representative of the set of prerequisite risks in an electronic memory.

12. The method of claim 1 further comprising
repeating by a computer steps (a)-(I) for a set of entities resulting in a green score calculated for each entity in the set of entities;
identifying by a computer a green classification; and
selecting by a computer for inclusion in the classification entities from the set of entities based at least in part on respective entity green scores.

13. The method of claim 1 further comprising
applying one or more of:
a risk type classifier to classify each risk pattern by type using a pre-defined taxonomy of risk types, and
a risk clusterer to group risks by similarity without using a pre-defined taxonomy, preferably using Hearst pattern induction.

14. A computer-based system for near real-time processing of data to derive one or more outputs for action by user for integrating server-based information processing services in a client-side application, the system comprising:
a processor adapted to execute code;
a memory for storing executable code;
an information integration and tools framework adapted to integrate a set of server-based tools into an application on a client access device, wherein the server-based tools are presented in the application on the client access device in a web-based interface accessed through corresponding toolbar plug-ins in the application;
an input adapted to identify and collect from a plurality of data sources connected to the system by a network connection a set of social media information associated with an entity to which a green score will be assigned;
a sentiment analysis module adapted to be executed by the processor and including code executable by the processor to perform a sentiment analysis on a set of social media information related to the identified entity, the sentiment analysis including a text based sentiment analysis of the set of social media information;
a set of risk-indicating patterns stored in the memory and accessible by the processor, wherein each pattern represents a set of sequences of tokens;
a risk identifying module having code executable by the processor to identify within the set of social media information a set of potential risks associated with the entity by using a risk-identification-algorithm based, at least in part, on the set of risk-indicating patterns and a filler sequence corresponding to a set of wildcards in the set of risk indicating patterns, wherein each filler is a sequence of tokens corresponding to the wildcards in a pattern;
a sentiment score module adapted to be executed by the processor and including code executable by the processor to determine a sentiment score based at least in part on the performed sentiment analysis including the text based sentiment analysis and on the identified set of potential risks;
a green score module adapted to be executed by the processor and including code executable by the processor to calculate the green score based at least in part upon the determined sentiment score, and wherein the green score represents a green sentiment score;
an output adapted to transmit a signal associated with the green score to the client access device for presentation in the web-based interface in the application on the client access device; and
wherein the sentiment analysis module is further adapted to subsequently perform a sentiment analysis on a second set of social media information related to the identified entity, the sentiment analysis including a text based sentiment analysis of the first set of social media information;
wherein the sentiment score module is further adapted to determine a second sentiment score based at least in part on the performed sentiment analysis including the text based sentiment analysis; and
wherein the green score module is further adapted to calculate an adjusted green score based at least in part upon the determined second sentiment score, and wherein the adjusted green score represents an adjusted green sentiment score, wherein the adjusted green score is transmitted to the client access device for presentation in the web-based interface in the application on the client access device, and wherein at least one user-selectable element, associated with a server-based tool adapted to enter a user-directed command related to the adjusted green score, is presented in the web-based interface.

15. Any of the method steps of claims 1-13 performed using the system of claim 14.
